# EUROPEAN PATENT SPECIFICATION

(11) **EP 2 466 720 B1**
(45) Date of publication and mention of the grant of the patent: **11.09.2013**
(21) Application number: 12156828.1
(22) Date of filing: 10.06.2009
(51) Int. Cl.: H02J 7/34, H02J 7/00

(54) **Power supply method and apparatus for radio access network nodes/sites**
Stromversorgungsverfahren und -vorrichtung für Knoten/Standorte von Funkzugangsnetzen
Procédé d'alimentation électrique et appareil pour noeuds/sites de réseau d'accès radio

(30) Priority: 10.06.2008 US 129195 P; 10.06.2008 US 60461 P; 25.06.2008 US 75354 P; 26.06.2008 US 76030 P
(43) Date of publication of application: 20.06.2012
(62) Divisional of application: 09762758.2
(73) Proprietor: Telefonaktiebolaget L M Ericsson (Publ), 164 83 Stockholm (SE)
(72) Inventor: Lindqvist, Dan, 116 47 Stockholm (SE); Österling, Jacob, 175 60 Järfälla (SE); Svensson, Anders, 191 44 Sollentuna (SE); Jonasson, Sten-Magnus, 175 47 Järfälla (SE); Holmström, Per, 194 63 Upplands-Väsby (SE)
(74) Representative: HOFFMANN EITLE

(56) References cited:
- EP-A1- 1 777 116
- EP-A2- 0 498 679
- EP-A2- 1 926 195
- US-A- 5 504 415
- US-A- 5 539 297
- US-A1- 2003 040 316
- US-B1- 6 462 511

## Description

### TECHNICAL FIELD

This invention pertains to telecommunications and the operation of radio access networks, and particularly to method and apparatus for supplying power to a radio access network node and controlling utilization of power at a radio access network node.

### BACKGROUND

In a typical cellular radio system, wireless terminals (also known as mobile stations and/or user equipment units (UEs)) communicate via a radio access network (RAN) to one or more core networks. The wireless terminals can be mobile stations or user equipment units (UE) such as mobile telephones ("cellular" telephones) and laptops with wireless capability (e.g., mobile termination), and thus can be, for example, portable, pocket, hand-held, computer-included, or car-mounted mobile devices which communicate voice and/or data with the radio access network.

The radio access network (RAN) covers a geographical area which is divided into cell areas, with each cell area being served by a base station, e.g., a radio base station (RBS), which in some networks is also called "NodeB" or "B node". A cell is a geographical area where radio coverage is provided by the radio base station equipment at a base station site. Each cell is identified by an identity within the local radio area, which is broadcast in the cell. The base stations communicate over the air interface operating on radio frequencies with the user equipment units (UE) within range of the base stations.

In some versions of the radio access network, several base stations are typically connected (e.g., by landlines or microwave) to a radio network controller (RNC). The radio network controller, also sometimes termed a base station controller (BSC), supervises and coordinates various activities of the plural base stations connected thereto. The radio network controllers are typically connected to one or more core networks.

The Universal Mobile Telecommunications System (UMTS) is a third generation mobile communication system, which evolved from the Global System for Mobile Communications (GSM), and is intended to provide improved mobile communication services based on Wideband Code Division Multiple Access (WCDMA) access technology. UTRAN, short for UMTS Terrestrial Radio Access Network, is a collective term for the Node B's and Radio Network Controllers which make up the UMTS radio access network. Thus, UTRAN is essentially a radio access network using wideband code division multiple access for user equipment units (UEs).

In a forum known as the Third Generation Partnership Project (3GPP), telecommunications suppliers propose and agree upon standards for third generation networks and UTRAN specifically, and investigate enhanced data rate and radio capacity. The Third Generation Partnership Project (3GPP) has undertaken to evolve further the UTRAN and GSM based radio access network technologies. In this regard, specifications for the Evolved Universal Terrestrial Radio Access Network (E-UTRAN) are ongoing within the 3rd Generation Partnership Project (3GPP). The Evolved Universal Terrestrial Radio Access Network (E-UTRAN) comprises the Long Term Evolution (LTE) and System Architecture Evolution (SAE).

Nodes of radio access networks require electrical power in order to operate their constituent units. Typically a radio access network node has a power supply connected to electrical mains which receives alternating current (AC) and converts the alternating current (AC) voltage to a direct current (DC) voltage. The direct current (DC) voltage is then distributed to various power consuming units of the node, including the electronics and power-utilizing elements of the node. In addition, most radio access network nodes have a battery backup system which can supply direct current (DC) voltage to the power consuming units of the node in the event of a disruption of the direct current (DC) voltage provided by the power supply, as may occur upon failure of the electrical mains or of a power utility.

A battery backup system typically comprises several elements, the main parts comprising a battery and a charger device. The input of the charger device is connected to a power source (mains) and the output to the battery. Very often the charger function is combined with a power supply capable of delivering power to the consumer and power for charging the battery, this is often the case in Lead Acid (LA) backup systems.

To prevent that the battery to fully discharge in backup mode, a switch is often added in front of the battery. This switch opens when the battery capacity has reached a predetermined level.

When a battery is fully discharged, either a huge battery current will be needed or the charge voltage must be lowered to limit the current. A problem with the huge battery current approach is that the entire system (e.g., charger, wiring, switch, etc.) must be dimensioned for this current. The problem with lowering the charge voltage is that the consumer will be fed with too low a voltage until after the battery is charged.

To prolong the lifetime for a battery, it should not be charged all the time. An efficient method is to disconnect the battery completely for long periods. To do this, several battery banks can be used, with only one switch closed and the rest opened. The battery bank with the closed switch will act as immediate back up in case of a mains outage; the rest will be connected shortly thereafter. Conventional battery backup systems require at least two battery banks to function (one resting and one active). This is space-consuming and costly. In some applications it is preferable to have the "rest function" with a single battery solution as well. This is prohibited by latency of the battery switch (delay to turn on the switch), which will case an interrupt in the DC out to the consuming system.

Many battery charging algorithms use the battery temperature to determine the amount of energy to charge the battery with.

Often there is a need for various backup capacities in different applications, or adding backup capacity to an existing system. Then it may not be possible to place all battery units at the same physical location, or within the same temperature zone. The problem then arises, either adding a complete power system with backup, plus logic to combine them together, toward the consumer, or find a place where to put all battery units together within the same temperature zone. Both solutions are costly and inconvenient.

Some telecommunications systems are spread over a large geographical area that contains or comprises a number of local sites, like a network for mobile telephony or similar. Such a system is typically connected together with communication links for operating and maintenance purpose. In such a system, each local site contains a power system responsible for generating power and backup capacity to handle a mains outage. In such a system the power consumption can vary over time depending on its usage. Each power system should be designed for its maximum power consumption and maximum backup capacity. In many cases the power resources will be only be partly used, running in idle mode.

In current configurations considerable effort is spent trying to minimize power consumption, Examples of power saving features include: (1) highly efficient power converters; (2) sleep mode on units; etc. The problems with these current configurations are that they still do consume some energy, which in a large system can add up to a lot of wasted energy. Another problem is that the solutions are local, which means that they do not have a global knowledge of the need for or of the energy savings.

Yet another problem with existing configurations is that it is not possible to monitor status of each fuse in the system (tripped or not), which may lead to unpredictable system behavior.

What is needed, and an object and/or advantage of one aspect of the present technology, is minimization of the energy consumption by turning off unused resources, both when operating on mains power and when operation on backup capacity.

EP 0 489 679 A2 discloses that terminal voltages of battery cells constituting a set battery are individually monitored by cell-voltage detecting circuits and input to a current control circuit. The current control circuit detects any of the monitored terminal voltages that attains a level indicating a fully charged state. A variable constant-current control circuit supplies a charging current by regulating power output by a main power supply. As the current control circuit detects a state in which one of the battery cells gets fully charged, the variable constant-current control circuit stops charging current into the set battery.

US 2003/0040316 A1 discloses an ad-hoc, peer-to-peer radio access system having a series of remote terminals, where each remote terminal is capable of forming a node, or hop, of the routing of a call made by one of the series of terminals. The call is routed along a routing path of terminals based on the class-of service. If the call to be transmitted is a voice call, then a routing path having low latency will be selected. If the call is a video transmission, then a routing path of low bit-error without excessive latency will be chosen. If the call is a data transmission, then the least-energy routing path will be chosen.

US 005504415 A discloses a method and an apparatus for equalizing the state of charge among a plurality of series-connected batteries. A module is connected in parallel with each of the batteries, respectively. Each module contains a voltage divider circuit so that the voltage across a battery may be measured to determine the state of charge, and a circuit which selectively shunts charging current around a battery or applies a discharging current to a battery. A charging transistor applies a charging current to the series of batteries and, depending upon the state of charge of each battery, a portion of the charging current may be shunted around the battery by its associated module so as to prevent overcharging of the battery. A controller monitors the state of charge of each of the batteries and the temperature of each of the batteries and adjusts the portion of the charging shunted around an individual battery so as to rapidly equalize the state of charge among the different batteries. This process is automatically conducted whenever a charging current is applied to the batteries so that the batteries are maintained in an equalized condition.

### SUMMARY

According to a first aspect of the invention, there is provided a node of a radio access network as set out in Claim 1.

According to a second aspect of the invention, there is provided a method of operating a node of a radio access network as set out in Claim 5.

### BRIEF DESCRIPTION OF THE DRAWINGS

The foregoing and other objects, features, and advantages of the invention will be apparent from the following more particular description of preferred embodiments as illustrated in the accompanying drawings in which reference characters refer to the same parts throughout the various views. The drawings are not necessarily to scale, emphasis instead being placed upon illustrating the principles of the invention.

Fig. 1A is a diagrammatic view of portions of an example telecommunications system including a radio access network which comprises radio network controller nodes and radio base station nodes.

Fig. 1B is a diagrammatic view of portions of an example telecommunications system including an LTE radio access network which does not comprise radio network controller nodes.

Fig. 2 is a diagrammatic view of an operation and management system to which plural sites or nodes are connected.

Fig. 3 is a schematic view of an example embodiment of a radio network control node of a radio access network.

Fig. 4 is a schematic view of an example embodiment of a radio base station node of a radio access network.

Fig. 5 is a schematic view of an example embodiment of a power supply system for a radio base station node of a radio access network.

Fig. 6 is a schematic view of an example embodiment of a power distribution unit (PDU).

Fig. 7 is a schematic view of an example embodiment of a battery fuse unit (BFU).

Fig. 8 is a diagrammatic view of portions of an example embodiment of a power supply section of a radio access network node comprising current limitation protection for battery charging.

Fig. 9 is a diagrammatic view of portions of an example embodiment of a power supply section of a radio access network node comprising current limitation protection for battery charging for plural battery units.

Fig. 10 is a flowchart showing basic, non-limiting acts or steps of an example method of operating a radio access network node for limiting current to a battery during battery charging.

Fig. 11 is a flowchart showing basic, non-limiting acts or steps of an example mode of the method of Fig. 10.

Fig. 12 is a diagrammatic view of portions of a power supply section of a radio access network node of an example embodiment having quickly implemented, intermittent battery charging.

Fig. 13 is a diagrammatic view of portions of a power supply section of a radio access network node of an example embodiment having quickly implemented, intermittent battery charging and further comprising a sensor configured to sense disruption of a mains voltage supply.

Fig. 14 is a diagrammatic view of portions of a power supply section of a radio access network node of an example embodiment having quickly implemented, intermittent battery charging and further comprising a sensor configured to sense disruption of a DV voltage supply.

Fig. 15 is a flowchart showing basic, non-limiting acts or steps of an example method of operating a radio access network node wherein a battery unit is quickly and intermittently charged.

Fig. 16 is a diagrammatic view of portions of a power supply section of a radio access network node of an example embodiment wherein battery unit(s) of same temperature are charged essentially concurrently.

Fig. 17 is a diagrammatic view of an example embodiment of the power supply section of Fig. 16 wherein each of the plural battery units comprises a single battery.

Fig. 18 is a diagrammatic view of an example embodiment of the power supply section of Fig. 16 wherein each of the plural battery units comprises a bank of plural batteries.

Fig. 19 is a diagrammatic view of an example embodiment of the power supply section of Fig. 16 wherein each of the plural battery units comprises one or more batteries residing in a same radio access network node cabinet structure.

Fig. 20 is a flowchart showing basic, non-limiting acts or steps of an example method of operating a radio access network node wherein battery unit(s) of same temperature are charged essentially concurrently.

Fig. 21 is a flowchart showing basic, non-limiting acts or steps of another example method of operating a radio access network node wherein battery unit(s) of same temperature are charged essentially concurrently.

Fig. 22 is a diagrammatic view of an operation and management system to which plural sites or nodes are connected and generically illustrates embodiments in which a node controller is configured to operate a power conveyance element in accordance with signals communicated with a controller which is remote from the node.

Fig. 23 is a diagrammatic view showing the system of Fig. 6ig. P26549-0 and a more detailed example implementation of a node.

Fig. 24 is a diagrammatic view of portions of a power supply section of a radio access network node of an example embodiment wherein fuse operation is remotely controlled external to the node.

Fig. 25 is a diagrammatic view of portions of a variation of the power supply section of Fig. 24.

Fig. 26 is a diagrammatic view of portions of a power supply section of a radio access network node of an example embodiment wherein node heater activation is controlled external to the node.

Fig. 27 is a diagrammatic view of portions of a power supply section of a radio access network node of an example embodiment wherein node cooling device activation is controlled external to the node.

Fig. 28 is a diagrammatic view of portions of a power supply section of a radio access network node of an example embodiment wherein power supply operation is remotely controlled external to the node.

Fig. 29 is a diagrammatic view of portions of a power supply section of a radio access network node of an example embodiment wherein power supply operation is locally controlled on the basis of preference characteristics for plural power consuming units.

Fig. 30 is a diagrammatic view of portions of a power supply section of a radio access network node of an example embodiment wherein power supply operation is locally controlled at a node.

Fig. 31 is a flowchart showing basic, non-limiting acts or steps of an example method wherein a power supply operation is locally controlled the basis of preference characteristics for plural power consuming units.

### DETAILED DESCRIPTION

In the following description, for purposes of explanation and not limitation, specific details are set forth such as particular architectures, interfaces, techniques, etc. in order to provide a thorough understanding of the present invention. However, it will be apparent to those skilled in the art that the present invention may be practiced in other embodiments that depart from these specific details. That is, those skilled in the art will be able to devise various arrangements which, although not explicitly described or shown herein, embody the principles of the invention and are included within its spirit and scope. In some instances, detailed descriptions of well-known devices, circuits, and methods are omitted so as not to obscure the description of the present invention with unnecessary detail. All statements herein reciting principles, aspects, and embodiments of the invention, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that block diagrams herein can represent conceptual views of illustrative circuitry embodying the principles of the technology. Similarly, it will be appreciated that any flow charts, state transition diagrams, pseudocode, and the like represent various processes which may be substantially represented in computer readable medium and so executed by a computer or processor, whether or not such computer or processor is explicitly shown.

The functions of the various elements including functional blocks labeled or described as "computer", "processor" or "controller" may be provided through the use of dedicated hardware as well as hardware capable of executing software in the form of coded instructions stored on computer readable medium. A computer is generally understood to comprise one or more processors, and the terms computer and processor may be employed interchangeably herein. When provided by a computer or processor, the functions may be provided by a single dedicated computer or processor, by a single shared computer or processor, or by a plurality of individual computers or processors, some of which may be shared or distributed. Such functions are to be understood as being computer-implemented and thus machine-implemented. Moreover, use of the term "processor" or "controller" shall also be construed to refer to other hardware capable of performing such functions and/or executing software, and may include, without limitation, digital signal processor (DSP) hardware, reduced instruction set processor, hardware (e.g., digital or analog) circuitry, and (where appropriate) state machines capable of performing such functions.

1.0 Overview of Telecommunications Environments

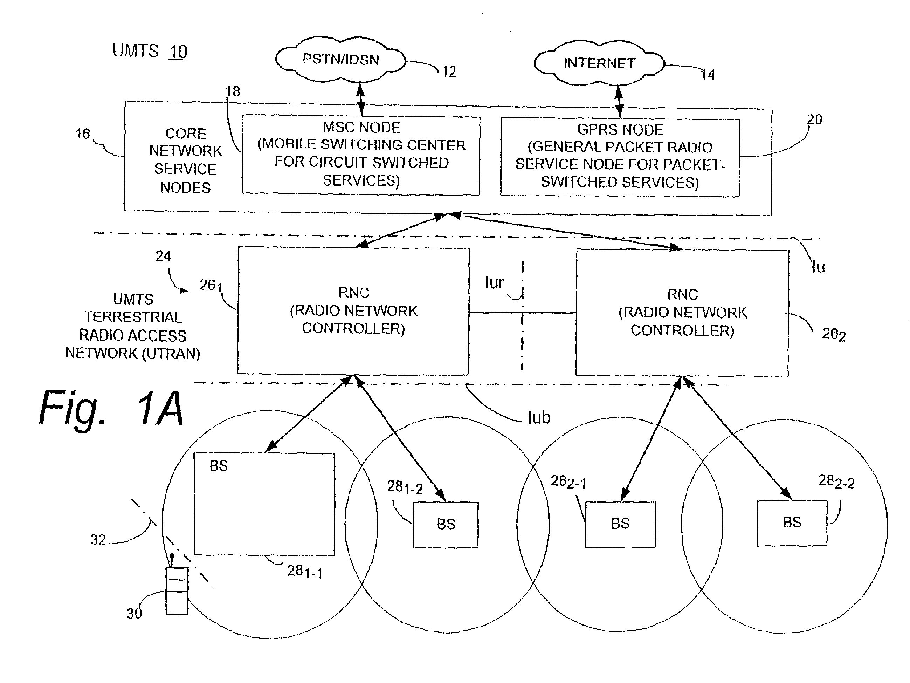

The technology disclosed herein is suited for use in differing types of telecommunications systems. A first example of such a telecommunications systems is shown in Fig. 1A as universal mobile telecommunications system (UMTS) 10. A representative, connection-oriented, external core network, shown as a cloud 12 may be for example the Public Switched Telephone Network (PSTN) and/or the Integrated Services Digital Network (ISDN). A representative, connectionless external core network shown as cloud 14, may be for example the Internet. Both core networks are coupled to their corresponding service nodes 16. The PSTN/ISDN connection-oriented network 12 is connected to a connection-oriented service node shown as a Mobile Switching Center (MSC) node 18 that provides circuit-switched services. The Internet connectionless-oriented network 14 is connected to one or more packet switching service node(s) tailored to provide packet-switched type services (such nodes possibly including, for example, a Gateway General Packet Radio Service (GPRS) support node (GGSN), a General Packet Radio Service (GPRS) Service (SGSN)).

Each of the core network service nodes 18 and 20 connects to a UMTS Terrestrial Radio Access Network (UTRAN) 24 over a radio access network (RAN) interface referred to as the Iu interface. UTRAN 24 includes one or more radio network controllers (RNCs) 26 and one or more base stations (BS) 28. For sake of simplicity, the UTRAN 24 of Fig. 1A is shown with only two RNC nodes, particularly RNC 26₁ and RNC 26₂. Each RNC 26 is connected to one or more base stations (BS) 28. For example, and again for sake of simplicity, two base station nodes are shown connected to each RNC 26. In this regard, RNC 26₁ serves base station 28₁₋₁ and base station 28₁₂, while RNC 26₂ serves base station 28₂₋₁ and base station 28₂₋₂. It will be appreciated that a different number of base stations can be served by each RNC, and that RNCs need not serve the same number of base stations. Moreover, Fig. 1A shows that an RNC can be connected over an Iur interface to one or more other RNCs in the UTRAN 24. Further, those skilled in the art will also appreciate that a base station is sometimes also referred to in the art as a radio base station, a node B, or B-node.

In the illustrated embodiments, for sake of simplicity each base station 28 is shown as serving one cell. Each cell is represented by a circle which surrounds the respective base station. It will be appreciated by those skilled in the art, however, that a base station may serve for communicating across the air interface for more than one cell. For example, two cells may utilize resources situated at the same base station site. Moreover, each cell may be divided into one or more sectors, with each sector having one or more cell/carriers.

A wireless terminal or user equipment unit (UE), such as user equipment unit (UE) 30 shown in Fig. 1A, communicates with one or more cells or one or more base stations (BS) 28 over a radio or air interface 32 (e.g., the Uu interface). Each of the radio interface 32, the Iu interface, the Iub interface, and the Iur interface are shown by dash-dotted lines in Fig. 1A.

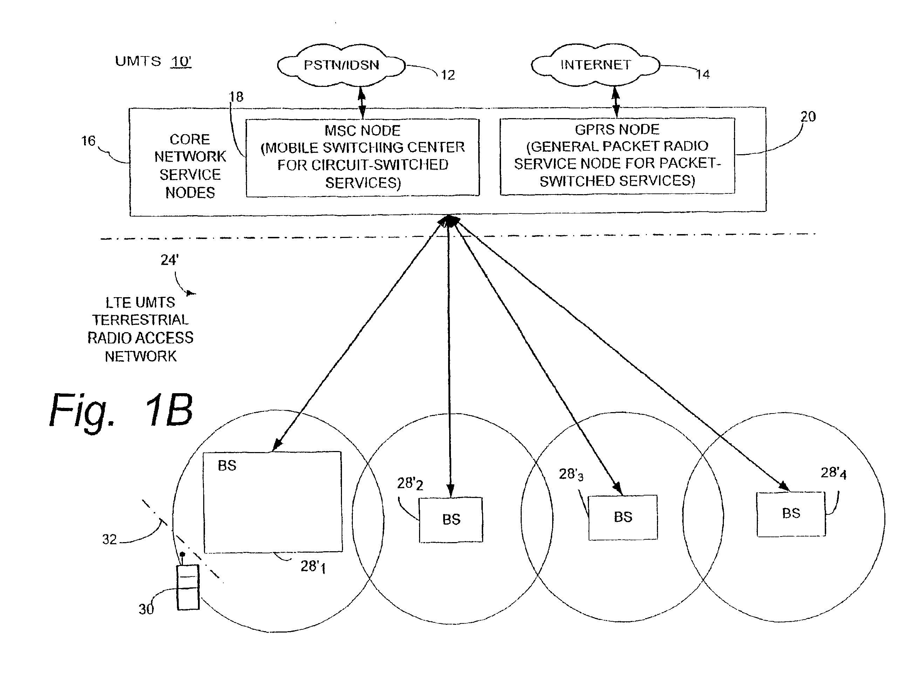

A second example of such a telecommunications systems is shown in Fig. 1B a Long Term Evolution (LTE) variant of a 3GPP radio access technology. In the example telecommunications system of Fig. 1B, the radio base station nodes 28' are connected directly to a core network rather than to radio network controller (RNC) nodes. In general, in LTE the functions of a radio network controller (RNC) node are performed by the radio base stations nodes 28'. As such, the radio access network (RAN) of an LTE system has an essentially "flat" architecture comprising radio base station nodes without reporting to radio network controller (RNC) nodes.

It will be appreciated that aspects of the technology disclosed herein can be utilized in many other types of radio access networks as well as nodes of those other types of radio access networks. Examples of such other radio access networks include GSM, GERAN, Advance Mobile Phone Service (AMPS) system; the Narrowband AMPS system (NAMPS); the Total Access Communications System (TACS); the Personal Digital Cellular (PDS) system; the United States Digital Cellular (USDC) system; and the code division multiple access (CDMA) system described in EIA/TIA IS-95.

2.0 Telecommunications Operation & Management

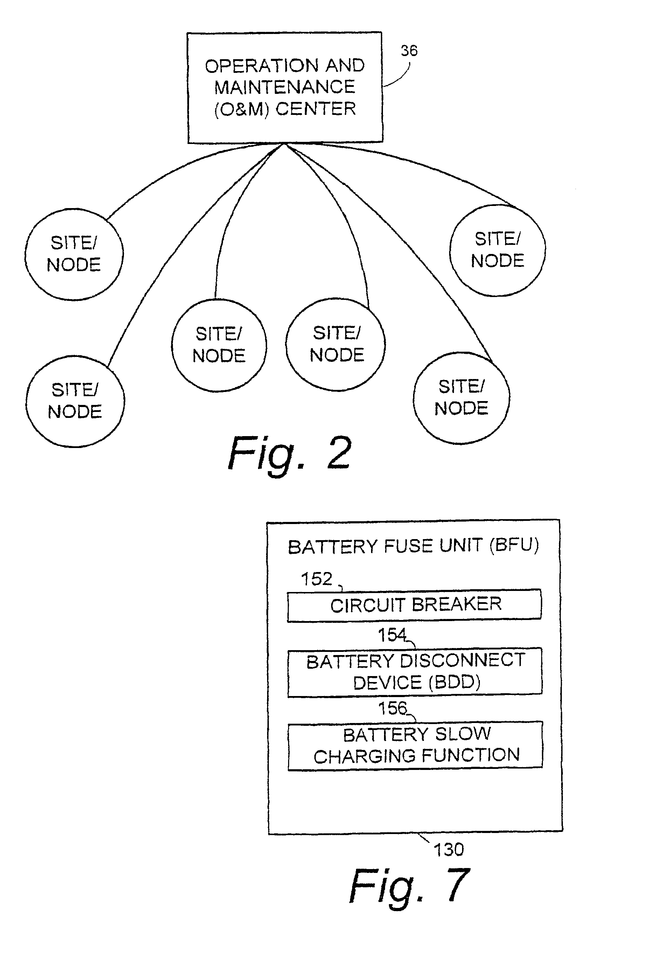

As indicated above, a radio access network comprises various nodes, such as radio base station nodes and (in some networks) radio network controller nodes. Often such nodes of one or more radio access networks or other sites of one or more telecommunications systems are connected to and/or comprise an operation and management system such as shown in Fig. 2. In particular, Fig. 2 shows an operation and management (O&M) center 36 to which plural sites or nodes are connected. An operation and management system such as shown in Fig. 2 facilitates performance of remote operations with respect to various aspects of a radio access network, e.g., remote control of activities of a radio network control node or a base station, for example. As described herein, some of the remotely controlled operations can pertain to power load control and/or the provision or management of backup power.

3.0 Overview of Radio Network Control Node Structure

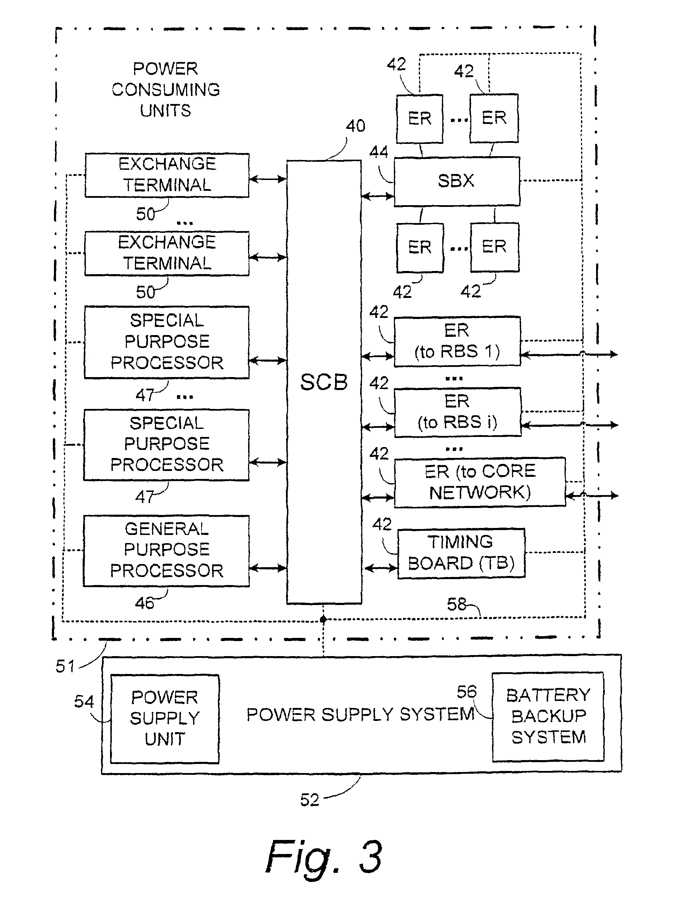

Fig. 3 shows an example embodiment of a radio network control node 26 of a radio access network. The non-limiting radio network control node 26 of Fig. 3 happens to be a switch-based node, and as such comprises a switch core in the form of switch core board (SCB) 40. The switch core board 40 serves as an interface to various extension racks (ER) 42 and to switch extension board (SXB) 44. The extension racks (ER) 42 can serves as interfaces to the radio base stations served by the radio network control node 26, to the core network, and to other radio network control nodes. The switch extension board 44, which serves as an extension of switch core board 40, facilitates connection to yet further extension racks 42. The radio network control node 26 further comprises a general purpose processor board 46 which serves as the computing heart of the radio network control node 26, and which in some embodiments can comprise a cluster of processors. The radio network control node 26 also comprises one or more special purpose processor boards (SPB) 47 which can be utilized for special, resource-intensive tasks such as processing user plane data. A timing board (TUB) 48 provides the timing reference for radio network control node 26. The radio network control node 26 further comprises plural exchange terminals 50 which serve as interface boards to processing parts of radio network control node 26. For example, exchange terminals 50 may be provided for PDH networks, for ATM networks, and for SDH/Sonet networks. The aforementioned boards and constituent components of radio network control node 26, framed by a dashed-double dotted iine, are typically power consuming units 51 of radio network control node 26 and are situated in one or more cabinets and typically occupy slots or racks in the cabinet(s).

The radio network control node 26 further comprises RNC power system 52 which supplies power to the aforementioned boards and components of radio network control node 26. The RNC power system 52 comprises both power supply unit 54 and battery backup system 56. The battery backup system 56 for the radio network control node 26 can take any of the forms which are hereinafter described or encompassed by the technology disclosed herein. The RNC power system 52 supplies DC voltage to the power consuming units of radio network control node 26 over power supply bus 58, which is depicted by a dotted line.

4.0 Overview of Radio Base Station Structure

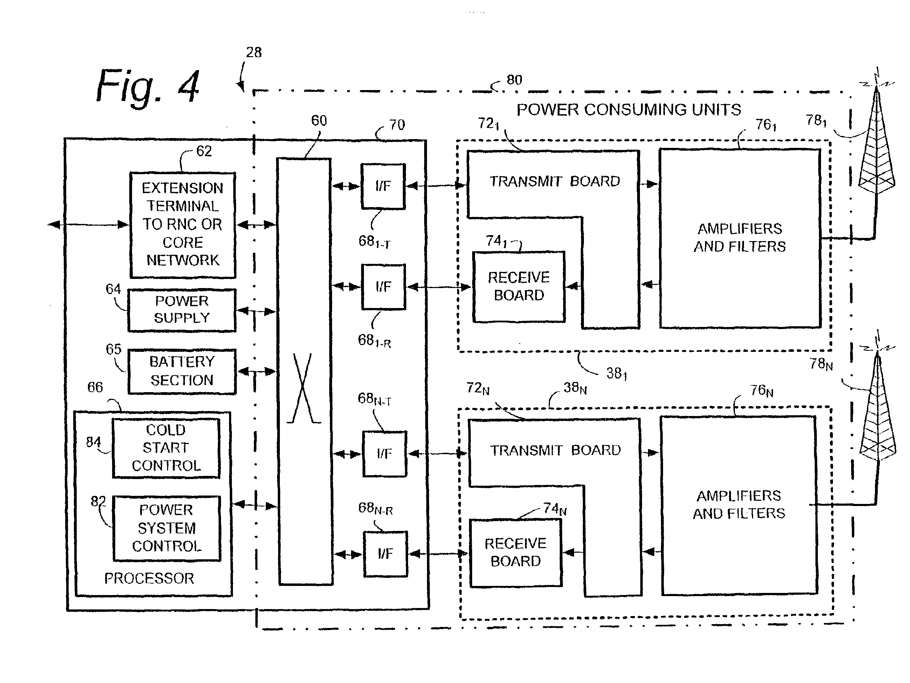

Fig. 4 illustrates, in non-limiting manner, more details of an example base station (BS) node 28 in accordance with one example embodiment. The base station (BS) node 28 of Fig. 4 can be (for example) a switched-based node having a switch 60 which serves to interconnect other constituent elements of base station (BS) node 28. Such other constituent elements include extension terminal 62; power supply system 64; battery section 65; base station main processor 66, and interface boards 68. Extension terminal 62 can serve to connect base station (BS) node 28 either to radio network controller (RNC) node 26 in a UTRAN environment, or to the core network in an LTE environment.

The embodiment of base station (BS) node 28 illustrated in Fig. 4 is housed in a rack having multiple subracks. Each subrack has one or more boards, e.g., circuit boards, mounted thereon. A first subrack 70 contains boards for each of extension terminal 62; power system 64; battery section 65; BS main processor 66, and interface boards 68. Each of the interface boards 68 is connected to a board on another subrack, e.g., one of the transmitter boards 72 or one of the receiver boards 74. Each receiver board 74 is connected to share certain transmitter/receiver resources in a corresponding transmitter board 72, with the transmitter board 72 being connected to a corresponding one of amplifiers and filters board 76. The amplifiers and filters board 76 is connected to an appropriate antenna 44. For example, interface board 68_{1-T} is connected to transmitter board 72₁, while interface board 68_{1-R} is connected to receiver board 74₁. The pair of transmitter board 72₁ and receiver board 74₁ is, in turn, connected to amplifiers and filters board 76₁. Similar connections exist for a second pairing of transmitter board 72₂ and receiver board 74₂, which interface via interface board 68_{2-T} and interface board 68_{2-R}, respectively. Each transceiver 38 of Fig. 4 thus comprises a subrack which includes a transmitter board 72, a receiver board 74, and amplifiers and filters board 76. The amplifiers and filters boards 76 are connected to antenna 78. In Fig. 4 example power consuming units 80 are framed by dashed, double-dotted line.

The base station main processor 66 of base station 28 comprises power control system 82 and cold start control unit 84.

5.0 Radio Base Station Power Supply System

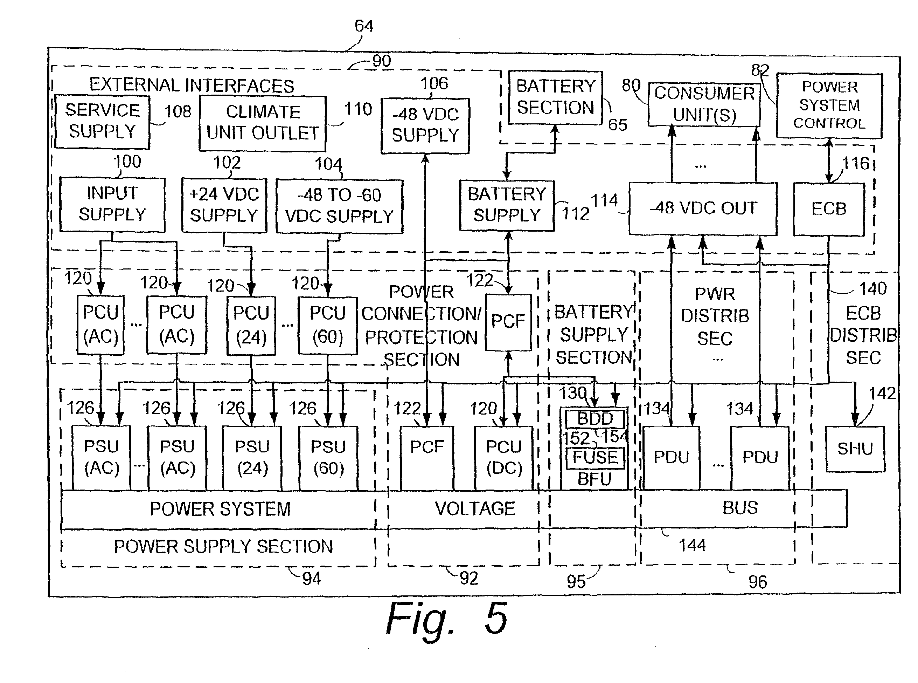

Fig. 5 shows in more detail certain aspects of power supply system 64 of base station 28. The power supply system 64 supplies -48 direct current voltage to the consumer units. The input supply sources can be either alternating current (AC) or direct current (DC). The power supply system 64 comprises several sections, including external interface section 90; power connection/protection section 92; power supply section 94; battery supply section 95; power distribution section 96; and ECB distribution section 98.

The external interface section 90 comprises input supply interface 100; +24 VDC supply interface 102; -48 to -60 VDC supply interface 104; -48 VDC supply interface 106; service supply interface 108; climate unit outlet 110; battery supply interface 112; -48 VDC out interface 114; and EBC interface 116.

The power connection/protection section 92 comprises power connection units (PCU) 120 and power filtering units (PCF) 122. Some of the power connection units (PCU) 120 and power supply units (PSU) 126 are provided for handling alternating current (AC) supplied by input supply interface 100. Others of power connection units (PCU) 120 and power supply units (PSU) 126 handle either direct current supplied by +24 VDC supply interface 102 or -48 to -60 VDC supply interface 104. The power filtering units (PCF) 122 connect either external -48 VDC supply (2-wire) or battery supply (2-wire) and distribute the -48 VDC to power connection units (PCU) 120 or to power system voltage bus 144.

The power supply section 94 comprises power supply units (PSU) 126. The power supply units (PSU) 126 convert the supplied input voltage to -48 VDC and distribute the -48 VDC to power system voltage bus 144. The power supply units (PSU) 126 have settable ouput power (1200Watt or 1800Watt) for minimizing an external fuse. As described hereinafter, the power supply units (PSU) 126 can be turned on or off remotely. In particular, the power supply units (PSU) 126 which handle AC and the -48 VDC ouputs can also be remotely controlled by power control system 82 via enclosure control bus (ECB) 140.

The battery supply section 95 comprises battery fuse unit (BFU) 130. The battery fuse unit (BFU) 130 is connected through a power filtering unit (PCF) 122 to battery supply interface 112, and through power filtering unit (PCF) 122 to a battery section such as battery section 65 of base station 28 or battery backup system 56 of radio network control node 26. The battery fuse unit (BFU) 130 distributes fused -48 VDC voltage to power system voltage bus 144 and controls the connection/disconnection of battery section 65 from the power supply system 64 due to different battery parameters.

The power distribution section 96 comprises power distribution units (PDU) 134. The power distribution units (PDU) 134 are connected through -48 VDC out interface 114 to power consuming units 80 of base station 28. The power distribution units (PDU) 134 distribute over-current and overload protected -48 VDC outputs from power system voltage bus 144.

The ECB distribution section 98 comprises enclosure control bus (ECB) 140 and support hub unit (SHU) unit 142. The enclosure control bus (ECB) 140 is connected to each of the power supply units (PSU) 126, the power filtering units (PCF) 122; the battery fuse unit (BFU) 130, the power distribution units (PDU) 134; to SHU unit 142; and to -48 VDC out interface 114. The support hub unit (SHU) unit 142 serves, e.g., to distribute the enclosure control bus (ECB) 140 to power system hardware.

Power system voltage bus 144 is connected to each of the power supply units (PSU) 126, the power filtering units (PCF) 122; the battery fuse unit (BFU) 130, and the power distribution units (PDU) 134. The power system voltage bus 144 thus serves, e.g., to distribute the -48 VDC system voltage. The power supply units (PSU) 126, power connection units (PCU) 120, power filtering units (PCF) 122, or the battery fuse unit (BFU) 130 [during discharge] supplies the -48 VDC to the power system voltage bus 144. The battery fuse unit (BFU) 130 [during charging] and the power distribution units (PDU) 134 distribute the -48 VDC system voltage from the power system voltage bus 144.

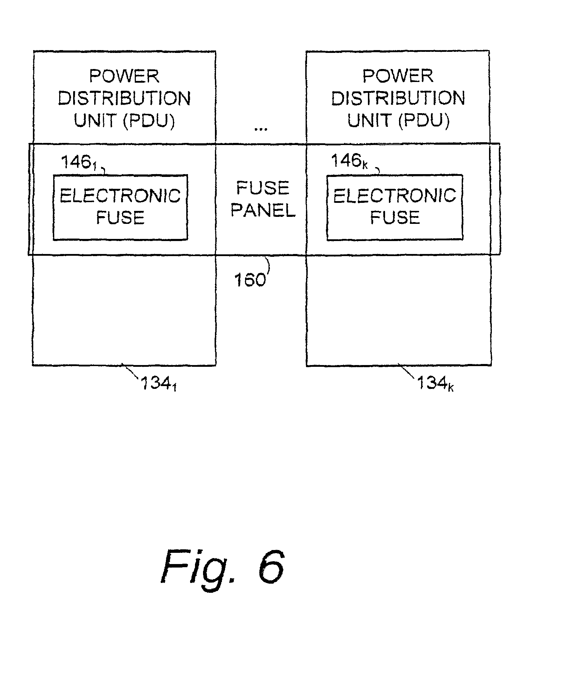

In an example embodiment shown in Fig. 6, the power distribution units (PDU) 134 can comprise an electronic fuse 146. The electronic fuse 146 can be configured with selectable trip values (e.g., 6 amps, 10 amps, or 20 amps) and can have a main/priority load configuration. As described hereinafter, the power distribution units (PDU) 134 can be turned on or off remotely to support reduced power consumption. In addition, in an example embodiment the power distribution units (PDU) 134 can have a settable cold-start-up function (e.g., for indoor cabinets).

The battery fuse unit (BFU) 130 comprises a fast acting switch. In an example embodiment described, e.g., in section 6.4 hereof, the battery fuse unit (BFU) 130 can be operated in a slow charging mode to limit an inrush current for discharged batteries. In an example embodiment described, e.g., in section 6.5 hereof, the battery fuse unit (BFU) 130 can be configured for intermittent charging for improved battery life time. Further, the battery fuse unit (BFU) 130 can facilitate enhanced voltage and current measurement capabilities.

The power connection units (PCU) 120 and power filtering unit (PCF) 122 provide input supply connections. In addition the power connection units (PCU) 120 and power filtering unit (PCF) 122 can facilitate surge protection and/or filtering functions. The power connection units (PCU) 120 and power filtering unit (PCF) 122 can also accommodate an unillustrated service outlet.

5.1 RBS Power Supply: General Operation durine AC Mains Supply

The AC mains power is supplied to the input supply interface input supply interface 100. The power from the AC mains is converted to -48 VDC by the power supply units (PSU) 126 that handle AC and is applied to power system voltage bus 144. The power distribution units (PDU) 134 distribute the -48 V from power system voltage bus 144 to the DC users, e.g., the power consuming units 80. The -48 VDC is also used to charge the batteries of battery section 65. Charging methods and battery test features can be set in the power control system 82.

5.2 RBS Power Supply: General Operation during AC Mains Failure

Upon failure of the AC main, battery power is supplied from battery section 65 to the battery supply interface 112. The power from battery section 65 is distributed to the power system voltage bus 144 via battery fuse unit (BFU) 130. The power distribution units (PDU) 134 then distribute the -48 VDC from the power system voltage bus 144 to the power consuming units 80.

When the battery section 65 is discharged to a certain level the power distribution units (PDU) 134 will disconnect those of the power consuming units 80 which are not priority users. That is, during low battery conditions the high priority users will remain connected, but not low priority users. But should the battery section 65 become sufficiently further discharged the battery section 65 will be totally disconnected to prevent over-discharge. When the AC mains resumes supply the battery section 65 and the power consuming units 80 will be reconnected.

Fig. 7 shows in more detail certain constituent components or functionalities comprising battery fuse unit (BFU) 130. As seen in Fig. 7, the current path between the battery section 65 and the power supply system 64 is protected by a circuit breaker or fuse 152. The circuit breaker 152 at least fulfills the requirements in IEC 60 947-2 UL 1077 or UL 489. The battery fuse unit (BFU) 130 also comprises a battery disconnection device (BDD) 154. The circuit breaker 152 permits manual opening and closing to achieve physical disconnection of battery section 65. If the circuit breaker 152 is tripped by an excessive current, the battery disconnection device (BDD) 154 shall also be opened. If the circuit breaker 152 is manually opened the battery disconnection device (BDD) 154 shall also be opened. To protect the internal circuitry it is possible to open the battery disconnection device (BDD) 154 to break an excessive current (before the circuit breaker 152 breaks), in either direction through battery fuse unit (BFU) 130, if it exceeds 500 amps. The battery disconnection device (BDD) 154 shall then latch in its opened state. When the circuit breaker 152 is manually closed after being tripped, either by excessive current or manual operation, the battery fuse unit (BFU) 130 shall resume normal operation. If the battery disconnection device (BDD) 154 has been used to break an excessive current, the battery fuse unit (BFU) 130 shall be reset by normal operation either by removing and then reapplying the system voltage or by toggling the circuit breaker open/closed manually.

Certain criteria can be set for connection of battery supply interface 112 to battery disconnection device (BDD) 154. For example, it may be required in an example mode that the system interface voltage be greater than the main and priority load reconnection voltage (stable for 10 seconds plus or minus 2 seconds), and that the voltage of battery supply interface 112 be greater than -39) volts (stable for 10 seconds plus or minus 1 second).

Fig. 7 also shows that battery fuse unit (BFU) 130 has battery slow charging function 156. Example embodiments of the battery slow charging function 156 are also described, e.g., in section 6.4 hereof. The battery slow charging function 156 prevents excessive battery charging current that could trip circuit breaker 152. In an example embodiment, the battery slow charging function 156 limits the charging current to 2 amperes until the batteries of battery section 65 have reached a charging status that allows normal charging. Whenever the battery supply interface 112 is connected to system voltage, the charging current is measured. If the measured charging current exceeds 135 amperes, the battery section 65 shall be disconnected and the battery slow charging function 156 shall is activated. If the slow charging mode is entered, the battery section 65 shall be reconnected to the battery supply interface 112 once every sixty seconds (plus or minus 5 seconds) until the charging current is below 130 amperes. The battery supply interface 112 shall remain connected and the slow charging mode terminated when the charging current is below 130 amperes.

5.3 RBS Power Supply: General Operation during +24VDC-Supply

The power supply system 64 can also receive +24 VDC through +24 VDC supply interface 102. The power from the +24 VDC supply interface 102 is converted to -48 VDC by the power supply units (PSU) 126 that handles DC and distributed to the power system voltage bus 144. The power distribution units (PDU) 134 distribute the - 48 VDC from the power system voltage bus 144 to the power consuming units 80. If the +24 VDC supply is down, the power consuming units 80 connected to the -48 VDC out interface 114 will lose power. The power supply units (PSU) 126 and the -48 VDC out interface 114 can be remote controlled by power control system 82 via the enclosure control bus (ECB) 140.

5.4 RBS Power Supply: General Operation during -48 to -60 VDC Supply

The power supply system 64 can also receive -48 VDC to -60 VDC through -48 to -60 VDC supply interface 104. The power from -48 to -60 VDC supply interface 104 is converted to -48 VDC by the power supply units (PSU) 126 which handles - 60VDC and applied to power system voltage bus 144. The power distribution units (PDU) 134 distribute the power from power system voltage bus 144 to the power consuming units 80. If the -48 to -60 VDC power is down, the users of power consuming units 80 lose power. The power supply units (PSU) 126 can the -48 VDC out interface 114 can be remote controlled by power control system 82 via the enclosure control bus (ECB) 140.

5.5 RBS Power Supply: General Operation during -48VDC Supply

The power supply system 64 can also receive -48 VDC (2 wire) power through -48 VDC supply interface 106. The power from -48 VDC supply interface 106 is applied to power system voltage bus 144 via power filtering unit (PCF) 122 for indoor applications, and for outdoor applications power filtering unit (PCF) 122 and power connection units (PCU) 120 with DC capabilities is used. The power distribution units (PDU) 134 distribute the power from power system voltage bus 144 to the power consuming units 80. If the -48 to -60 VDC power is down, the users of power consuming units 80 lose power. The -48 VDC out interface 114 can be remote controlled by power control system 82 via the enclosure control bus (ECB) 140.

5.6 RBS Power Supply: Electronic Fuse

Each of the power distribution units (PDU) 134 comprises a fuse 146, which preferably is an electronic fuse. Fig. 6 shows plural power distribution units (PDU) 134₁ - 134ₖ, with the power distribution units (PDU) 134₁ - 134ₖ comprising respective fuses 146₁ - 146ₖ. The fuses 146₁ - 146ₖ for the respective power distribution units (PDU) 134₁ - 134ₖ can occupy or be conceptualized as belonging to a fuse panel 160.

The electronic fuse 146 for each of the power distribution units (PDU) 134 can be configured and employed for over-current and overload protection and other functions. As mentioned above, the electronic fuse 146 has configurable current trip values of either 6 amps, 10 amps, or 20 amps. The electronic fuse 146 is placed in a negative (-48 VDC) branch and comprises the following functionalities: short circuit protection; over -current protection, load disconnection/reconnection; and a protective fuse. In an example embodiment the electronic fuse 146 can start up into a short circuit with 3 kA source current without damage.

In an example embodiment it is possible to disconnect/reconnect each output by manual operation. The power distribution units (PDU) 134 are protected from unintentional manual intervention of the electronic fuse 146 by a 100 ms delay when a manual button is pressed. A failure in electronic fuse 146 results in an open circuit. In case of a tripped electronic fuse 146 the manual control must be pressed to turn on the electronic fuse 146 or it can be turned on remotely. In fact, the state of the electronic fuse 146 can be set on or off by power control system 82. Remote control of the fuse 146 is described further in, e.g., section 7.1.

6.0 Battery Charging Functions

As understood from the foregoing, a radio access network node can comprise a battery section which can be used to supply power (backup or otherwise) to one or more consuming/consumer units. For example, radio network control node 26 (see Fig. 3) can comprise battery backup system 56 and base station 28 (see Fig. 4 and Fig. 5) can comprise battery section 65. As used herein, a "battery unit" is understood to encompass one or more batteries, and thus to include such battery arrangements as battery backup system 56 and battery section 65 as well as battery arrangements for other nodes or telecommunication sites or structures, although differing reference numeral(s) may be associated with the battery unit(s). Depending on what types of batteries are included in the respective battery sections, differing battery charging functions are possible. Various differing battery charging functions are described herein. It should be understood that names or numerals herein used to reference one or more consuming/consumer units are understood to encompass consuming/consumer units such as one or more of the power consuming units 51 of radio network control node 26 and one or more of the power consuming units 80 of base station 28.

6.1 Battery Charging Functions: Float Charging

Float charging is used to refill energy in a battery unit that needs to be recharged. In a base station 28 the float charging function sets the output voltage of the power supply units (PSU) 126 to a float charging voltage level. The power supply units (PSU) 126 that handle AC voltage have adjustable output voltage and can change output voltage to a requested value, and can regulate DC output voltage to a desired value in predetermined steps (e.g., 10 mV).

6.2 Battery Charging Functions: Temperature-Controlled Float Charging

In order to prolong lifetime of the battery unit it is possible in the temperature-controlled float charging mode to change the float charging voltage as a function of temperature. The temperature-controlled float charging function charges the battery with a voltage level that depends on the battery temperature by setting the output voltage on the power supply units (PSU) 126 to the required temperature-dependent voltage level.

6.3 Battery Charging Functions: Boost Charying

Boost charging can be used to refill energy in a battery unit quickly by charging the battery unit with a higher voltage for a certain time after discharge. To attain the boost charge a power supply unit (PSU) 126 is directed to supply output voltage at the boost charge voltage level for a specified period of time.

6.4 Battery Charging Functions: Slow Changing

In one of its aspects the technology disclosed herein concerns a node of a radio access network having current limitation protection for battery charging. This aspect of current limitation protection for battery charging is also known as battery slow charging (see battery slow charging function 156 described with reference to Fig. 7).

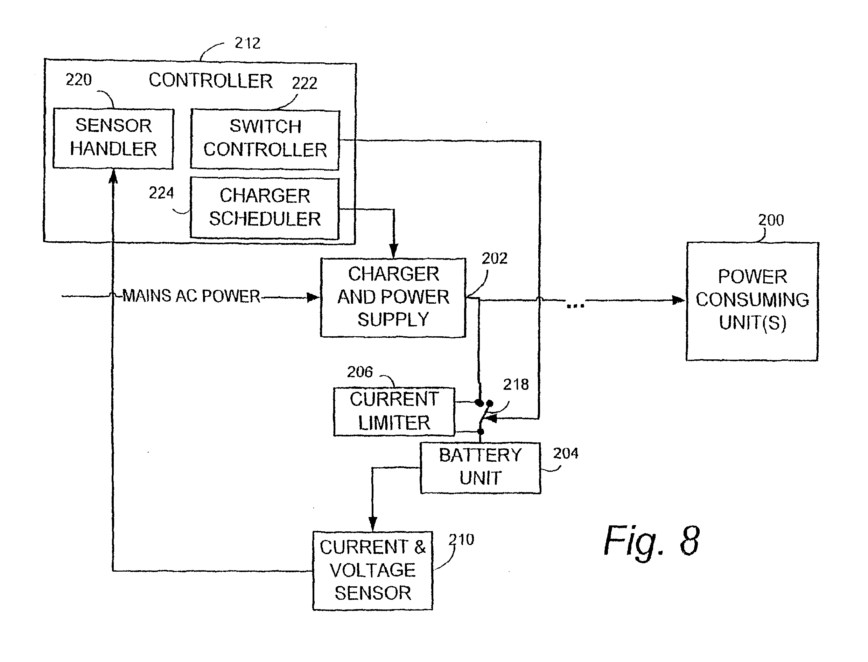

In an example embodiment illustrated in Fig. 8 the radio access network node comprises at least one power consuming unit 200 involved in operation of the radio access network node; charger and power supply source 202; battery unit 204; current limiter 206; sensor 210; and controller 212. The charger and power supply source 202 is configured to supply direct current power to the at least one power consuming unit 200. The battery unit 204 is configured for selective connection to the at least one power consuming unit 200 for selectively supplying direct current power to the at least one power consuming unit 200. The charger and power supply source 202 is configured for selective connection to battery unit 204. The sensor 210 is configured to make a determination of a voltage level of battery unit 204. In a charging mode the controller 212 is configured to selectively connect the current limiter 206 between the charger and power supply source 202 and the battery unit 204 in accordance with the voltage level determination. It will be appreciated that, in the illustrated example embodiment, the charger and power supply source 202 serves both as a power supply source and a charging unit. In alternative embodiments the power supply source and the charging unit can be provided separately.

The example implementation the radio access network node illustrated in Fig. 8 further comprises a switch 218 connected between battery unit 204 and charger and power supply source 202 and in parallel to current limiter 206. In this example implementation controller 212 is configured to close switch 218 and thereby bypass current limiter 206 when the voltage level applied to battery unit 204 is above a predetermined level.

As shown in Fig. 8, the controller 212 comprises various functionalities or units such as sensor handler 220; switch controller 222; and charger scheduler 224. The sensor handler 220 receives and processes the signal from sensor 210 and operates switch controller 222 in accordance therewith. The switch controller 222 issues signals for opening and closing of switch 218. The charger scheduler 224 directs the timing of charging of battery unit 204.

In an example implementation, the current limiter is a passive resistance. In another example implementation the current limiter is an electronic switch, and the controller 212 is configured to turn switch 218 on and off to obtain an average load current within a predetermined limit.

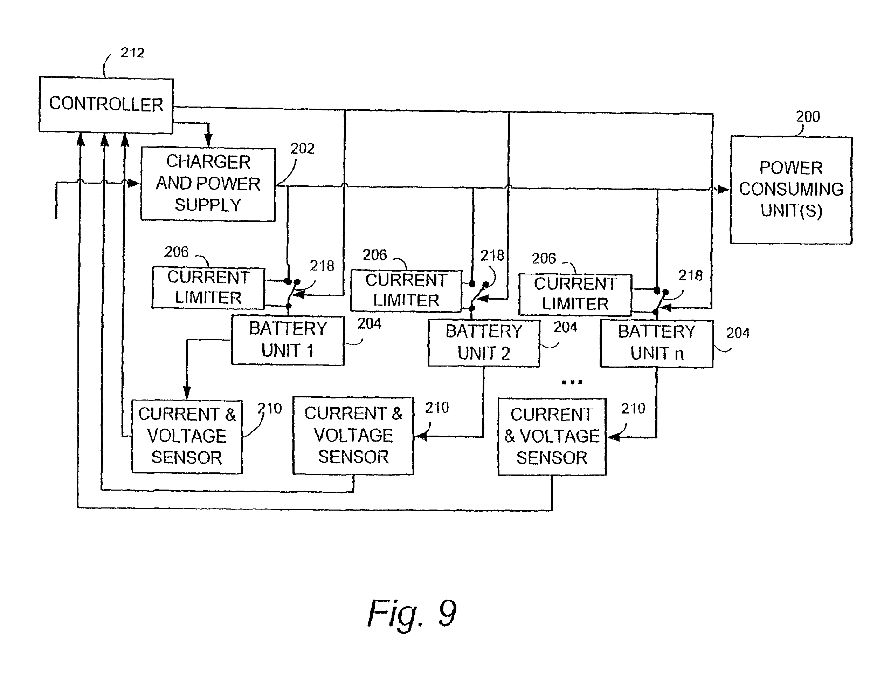

Fig. 9 shows that, in an example embodiment, the node can comprise plural battery units 204, with each battery unit 204 having an associated current limiter 206 and switch 218.

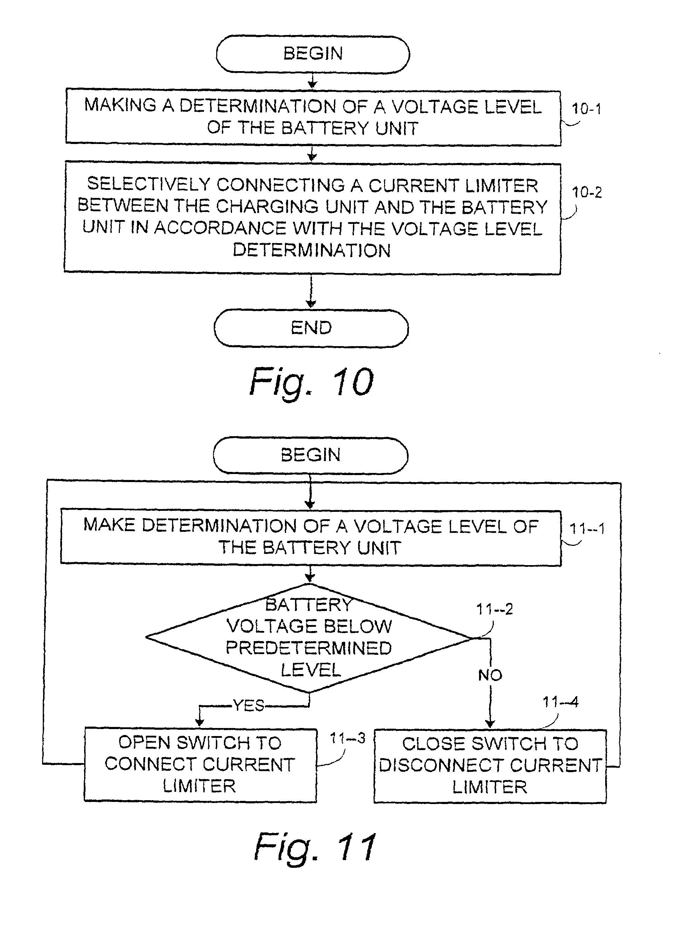

Fig. 10 illustrates a basic, representative, non-limiting acts or steps in an example method of operating a node of a radio access network (such as the radio access network node of Fig. 8). Act 10-1 of the method comprises making a determination of a voltage level of the battery unit, and subsequent act 10-2 comprises connecting a current limiter (e.g., current limiter 206) between the charging unit (e.g., charger and power supply source 202) and the battery unit 204 in accordance with the voltage level determination.

Fig. 11 illustrates a mode of the method which corresponds to the implementation of Fig. 8. The mode of Fig. 11 comprises closing a switch connected between the battery unit and the charging unit and in parallel to the current limiter when the voltage level is above a predetermined level. In particular, the mode of Fig. 11 comprises (as act 11-1) making a determination ofa voltage level of the battery unit 204. Act 11-2 comprises checking whether the battery voltage level of battery unit 204 is below a predetermined level. If the check of act 11-2 is positive, then as act 11-3 the controller 212 opens the switch 218 to connect the current limiter 206. If the check of act 11-2 is negative, then as act 11-4 the controller 212 closes the switch 218 to connect the current limiter 206.

In an example embodiment, the node of a radio access network having current limitation protection for battery charging is a base station 28 which has battery slow charging function 156 (see also Fig. 7). In such example embodiment of a base station 28 the charger and power supply source 202 can be realized by or be comprised of power supply units (PSU) 126 and battery fuse unit (BFU) 130. The sensor 210. current limiter 206, and switch 218 can (in an example implementation) comprise battery fuse unit (BFU) 130. The battery unit 204 can comprise battery section 65, and controller 212 can comprise or be realized by power control system 82/base station main processor 66. The battery slow charging function 156 limits the charging current applied to battery unit 204 to 2 amperes until the battery (ies) of battery unit 204 have reached a charging status that allows normal charging (e.g., the predetermined level of act 11-2). Whenever the battery supply interface 112 is connected to system voltage, the charging current is measured. If the measured charging current exceeds 135 amperes, the battery unit 204is disconnected (act 11-4) and the battery slow charging function 156 is activated. If the slow charging mode is entered, the battery unit 204 is reconnected to the battery supply interface 112 once every sixty seconds (plus or minus 5 seconds) until the charging current is below 130 amperes. The battery supply interface 112 shall remain connected and the slow charging mode terminated when the charging current is below 130 amperes (act 11-3).

In another example embodiment, the node of a radio access network having current limitation protection for battery charging is radio network control node 26. In such example embodiment of a radio network control node 26 the charger and power supply source 202 can be realized by or be comprised of RNC power system 52. The sensor 210, current limiter 206, and switch 218 can (in an example implementation) comprise RNC power system 52 or be situated on another board of the node. The battery unit 204 can comprise power supply unit 54, and controller 212 can comprise or be realized by general purpose processor board 46 or even one of the special purpose processors 47.

Thus, in one of its aspects the technology disclosed herein introduces a current-limited device which can be used until the battery voltage reaches a proper level. The current-limited device can be connected in parallel with a battery switch which normally is closed in order to bypass the current limiting function. If a high charge current is detected, then the switch opens to activate a "slow charge function." To deactivate the slow charge function the battery voltage is sensed, and at a certain level, the current limiter is by-passed. The current limiter can be designed as a passive resistance, or if an electronic switch is used, as a logic device turning the switch on and off rapidly to obtain an average load current within the limits.

Example advantages of this technology include avoiding costly over-dimensioning of the power system for an infrequent case and enabling the consumer device to be active even when a battery is deeply discharged.

6.5 Battery Charging Functions: Intermittent Charging

In one of its aspects the technology disclosed herein concerns a node of a radio access network having quickly implemented, intermittent battery charging. The mode of intermittent battery charging is particularly beneficial with the battery unit 204 comprises one battery.

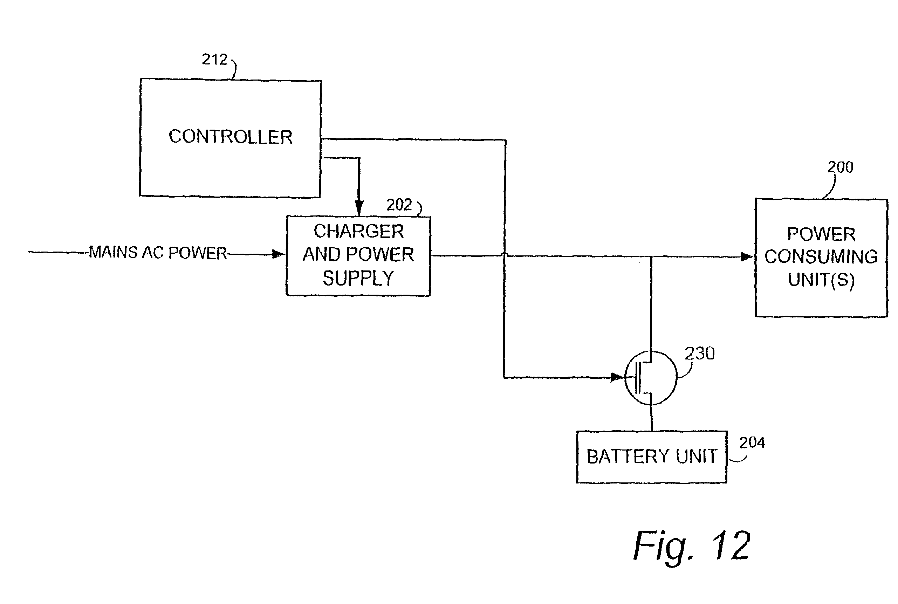

In an example embodiment illustrated in Fig. 12, the radio access network node comprises at least one power consuming unit 200 involved in operation of the radio access network node; charger and power supply source 202; battery unit 204; electronic switch 230; and, controller 212. The charger and power supply source 202 is configured to supply direct current power to the at least one power consuming unit 200. The battery unit 204 is configured for selective connection to the at least one power consuming unit 200 for selectively supplying direct current power to the at least one power consuming unit 200. The charger and power supply source 202 is configured for selective connection to the battery unit 204. The electronic switch 230 is connected between charger and power supply source 202 and battery unit 204. The controller 212 is connected to electronic switch 230 and configured to operate the electronic switch 230 in event of a disruption of direct current power to the at least one power consuming unit 200. It will be appreciated that, in the illustrated example embodiment, the charger and power supply source 202 serves both as a power supply source and a charging unit. In alternative embodiments the power supply source and the charging unit can be provided separately.

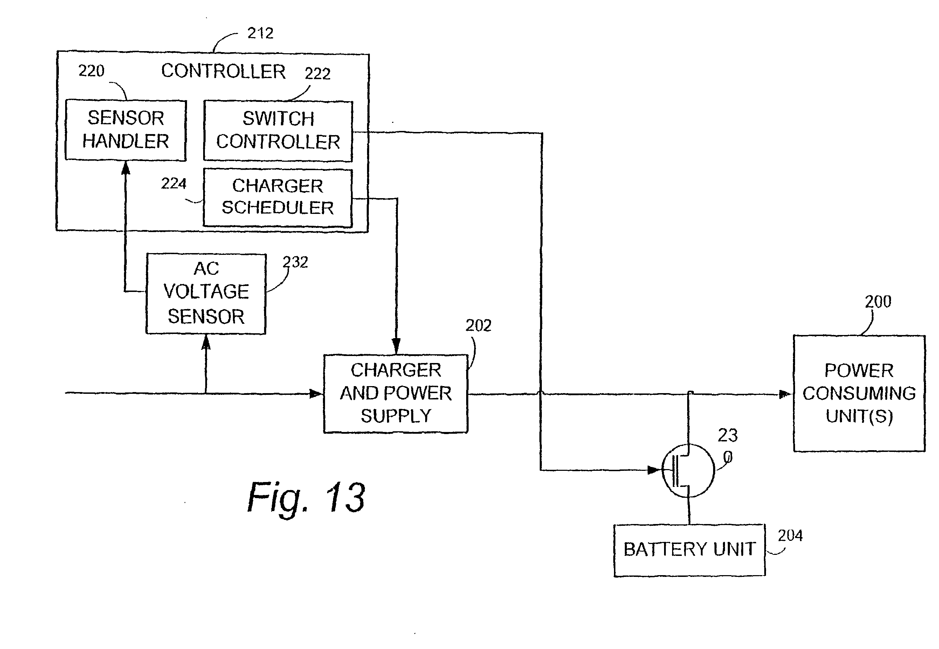

An example implementation of the radio access network node illustrated in Fig. 13 further comprises AC mains sensor 232 configured to sense the mains voltage applied to the charger and power supply source 202 and to apply a signal to the controller 212 indicative of the ultimate disruption of direct current power to the at least one power consuming unit 200. Fig. 13 further shows that controller 212 comprises sensor handler 220 which receives and processes the signal issued by AC mains sensor 232. In addition, controller 212 comprises switch controller 222 which is configured to operate electronic switch 230 as well as charger scheduler 224. The charger scheduler 224 is configured to direct the timing of charging of battery unit 204.

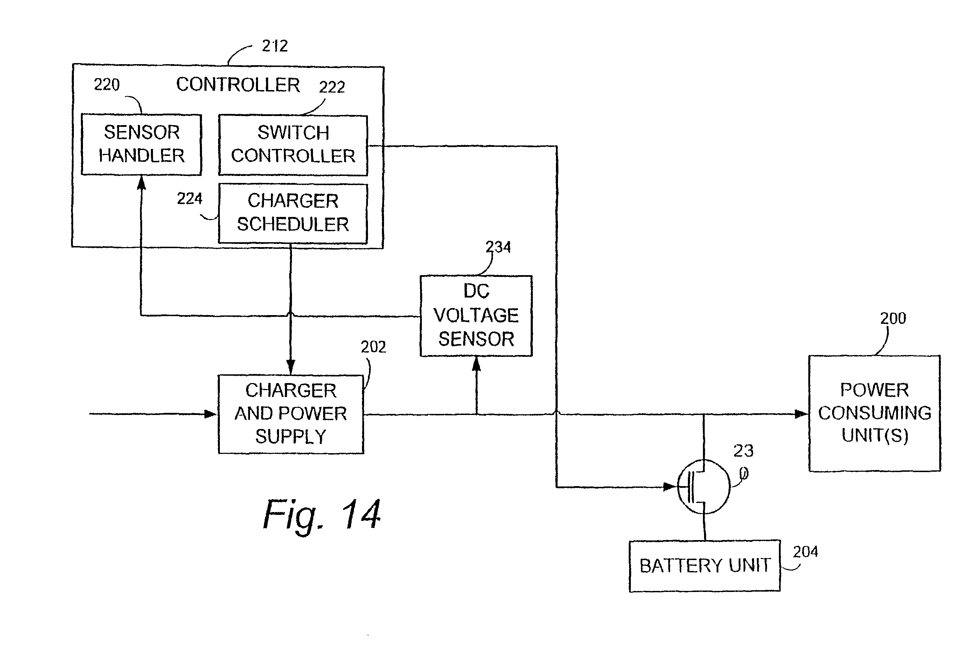

Another example implementation illustrated in Fig. 14 further comprises a DC voltage sensor 234 configured to sense the direct current power supplied by charger and power supply source 202 and to apply a signal to controller 212 indicative of the disruption of direct current power to the at least one power consuming unit 200. Sensor handler 220 which receives and processes the signal issued by DC voltage sensor 234 and communicates with switch controller 222 regarding needed operation of electronic switch 230.

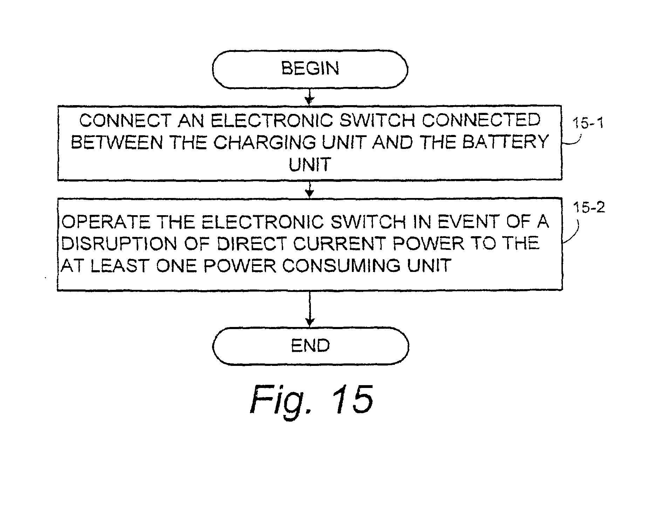

In another of its aspects the technology disclosed herein concerns a method of operating a node of a radio access network. Fig. 15 shows basic, representative acts or steps comprising an example method of quickly implemented, intermittent battery charging for a radio access network node. In an example embodiment the method comprises (as act 15-1) connecting an electronic switch such as electronic switch 230 between a charging unit and a battery unit, and (as act 15-2) using a controller connected to the electronic switch to operate the electronic switch in event of a disruption of direct current power to the at least one power consuming unit.

In an example mode understood with reference to Fig. 13, the method further comprises sensing a mains voltage applied to the power supply source and applying a signal to the controller indicative of the disruption of direct current power to the at least one power consuming unit.

Another example mode understood with reference to Fig. 14, the method further comprises sensing the direct current power supplied by the power supply source and applying a signal to the controller indicative of the disruption of direct current power to the at least one power consuming unit.

In an example embodiment, the node of a radio access network having quickly implemented, intermittent battery charging is a base station 28. In such example embodiment of a base station 28 the charger and power supply source 202 can be realized by or be comprised of power supply units (PSU) 126 and battery fuse unit (BFU) 130. The electronic switch 230 can comprise battery fuse unit (BFU) 130. The battery unit 204 can comprise battery section 65, and controller 212 can comprise or be realized by power control system 82/base station main processor 66.

In another example embodiment, the node of a radio access network having quickly implemented, intermittent battery charging is radio network control node 26. In such example embodiment of a radio network control node 26 the charger and power supply source 202 can be realized by or be comprised of RNC power system 52. The electronic switch 230 can (in an example implementation) comprise RNC power system 52 or be situated on another board of the node. The battery unit 204 can comprise power supply unit 54, and controller 212 can comprise or be realized by general purpose processor board 46 or even one of the special purpose processors 47.

Thus, embodiments of battery backup systems can comprise an electronic switch with a very fast turn on time. Preferably the electronic switch is placed in front of the battery. To turn off and on the switch, control software can be employed. To turn on the switch in case of a mains outage dedicated hardware can be used. The switch can be activated either by sensing the mains voltage (see Fig. 13) or by sensing the DC level from the power supply (see Fig. 14).

This technology has many advantages. For example, the technology enables the battery lifetime prolonging function "rest" with one battery only. The technology is a cost and volume effective compared to existing solutions. Moreover, using the electronic switch with a very fast turn on time causes only minor technical issues, which can easily be handled by the consumers' internal DC filters.

6.6 Battery Charging Functions: Batteries in Separate Banks With Same Temperatures Charged At Same Time

In one of its aspects the technology disclosed herein concerns a node of a radio access network having plural banks of battery units. Separate banks with the same temperature are charged at a separate time. Banks of differing temperatures are charged at different times.

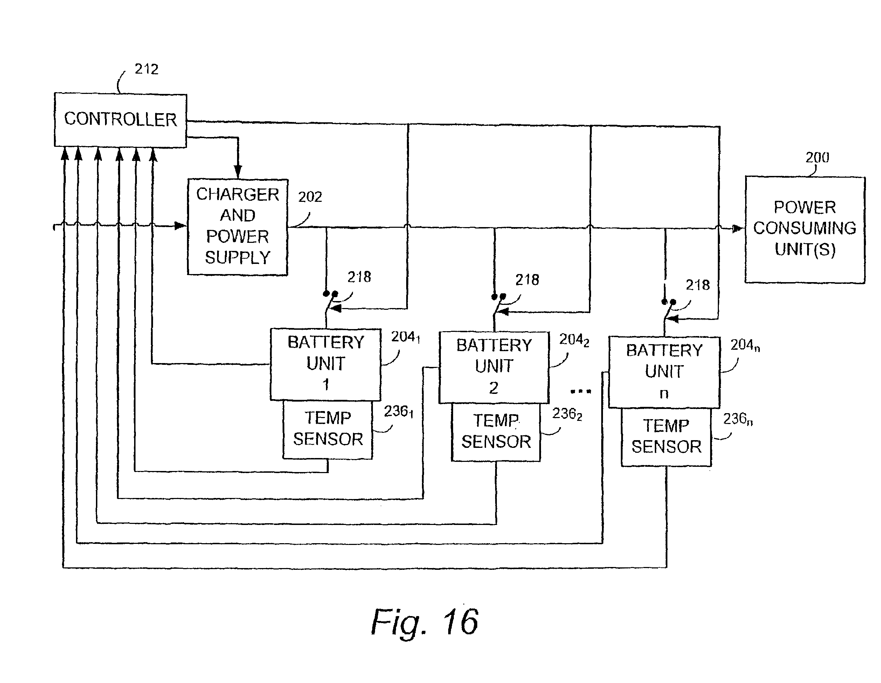

An example embodiment of the radio access network node illustrated in Fig. 16 comprises at least one power consuming unit 200 involved in operation of the radio access network node; charger and power supply source 202; plural backup battery units 204₁ - 204ₙ; plural temperature sensors 236₁- 236ₙ; and controller 212. The plural temperature sensors 236₁- 236ₙ are configured to measure temperatures of the respective plural battery units 204₁ - 204ₙ. The plural temperature sensors 236₁- 236ₙ can be, by way of non-limiting example, Analog Device model AD 592 CNZ. The charger and power supply source 202 is configured to supply direct current power to the at least one power consuming unit 200.

The plural battery units 204₁ - 204ₙ are each configured for selective connection to the at least one power consuming unit 200 for selectively supplying direct current power to the at least one power consuming unit 200. The charger and power supply source 202 is configured for selective connection to each of the plural battery units 204₁ - 204ₙ. The controller 212 is connected to the plural temperature sensors 236₁- 236ₙ and is configured to charge essentially concurrently whichever of the battery units have an essentially same temperature.

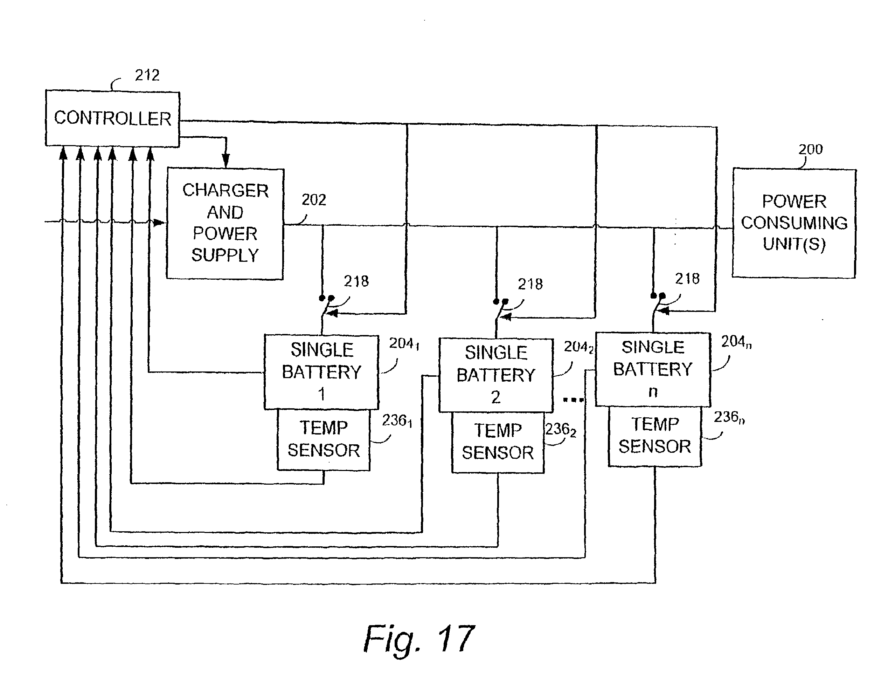

In some example embodiments each of the plural battery units comprises a single battery, such as illustrated in Fig. 17. In the embodiment of Fig. 17, there is thus a one to one ratio of single batteries to temperature sensors 236.

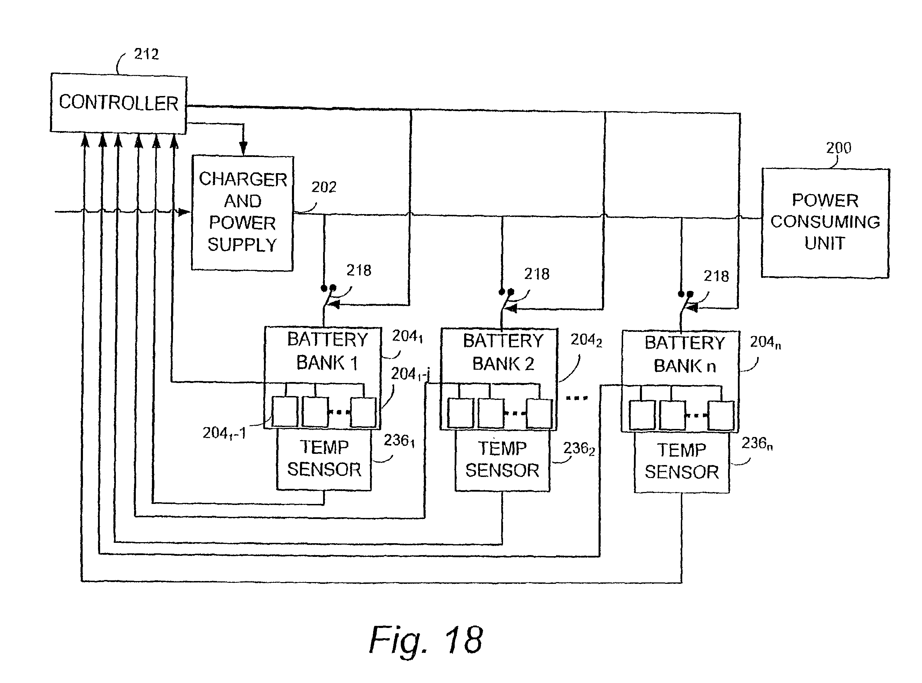

In other example embodiments (illustrated, for example, in Fig. 18) each of the plural battery units 204₁ - 204ₙ comprises a bank of plural batteries. For example, battery unit 204₁ comprises plural individual batteries 204₁-1 through 204₁-j. In the embodiment of Fig. 18, one and the same temperature sensor 236 serves the plural individual batteries of a same bank. For example, temperature sensor 236₁ measures the temperature of the bank comprising batteries 204₁-1 through 204₁-j.

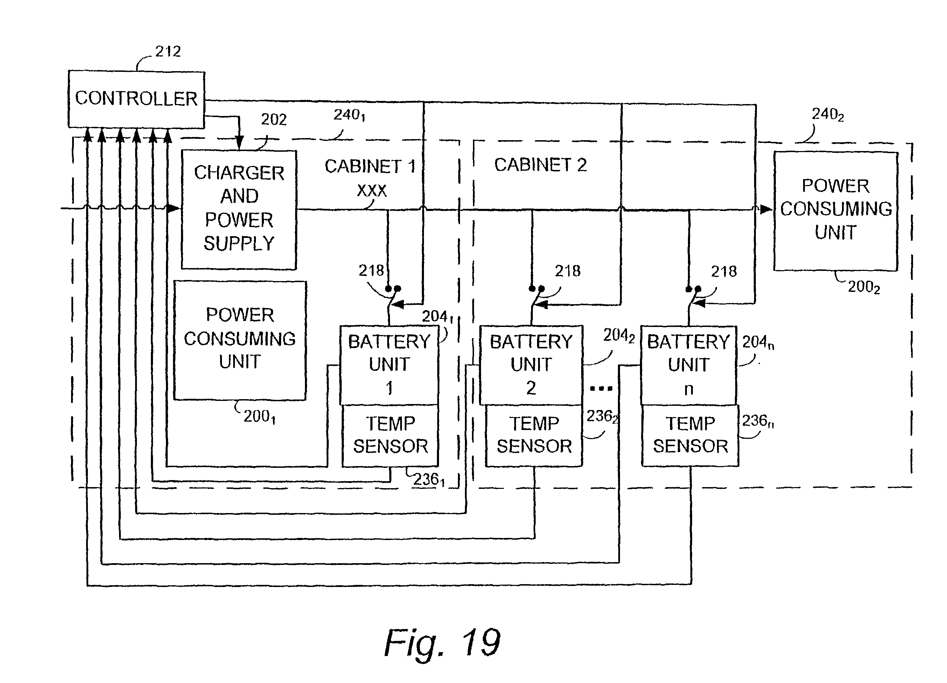

In other example embodiments (illustrated, for example, in Fig. 19) each of the plural battery units 204₁ - 204ₙ comprises one or more batteries residing in a same radio access network node cabinet structure. For example, in the non-limiting implementation shown Fig. 19 a first cabinet 240₁ of the node houses battery unit 204₁ and power consuming unit 200₁, while a second cabinet 240₂ of the node houses battery units 204₂ through and including 204ₙ as well as power consuming unit 200₂. The battery units 204₁ - 204ₙ and power consuming units 200 can be differently divided or distributed among two or more cabinets 240, with each cabinet 240 housing one or more battery units (each battery unit comprising either a single battery or a bank of batteries).

It should be appreciated particularly in the example embodiment of Fig. 19 that the presence of differing types of power consuming units 80 in differing cabinets 240 may result in different temperatures of or proximate the multi-cabined distributed battery units 204₁ - 204ₙ,

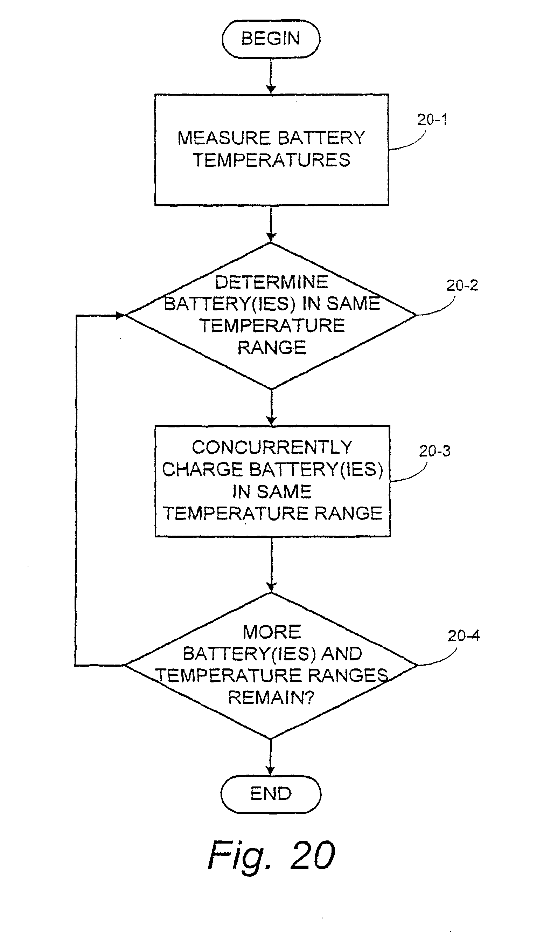

In another of its aspects the technology disclosed herein concerns a method of temperature-dependent group charging of multiple backup battery units comprising a radio access network node. An example mode of the method is illustrated in Fig. 20, which shows basic, non-limiting, representative acts or steps comprising method of operating a node of a radio access network. Act 20-1 of the method of Fig. 20 comprises measuring temperatures of plural battery units. As indicated above, each of the plural battery units are configured for selective connection to at least one power consuming unit involved in operation of the radio access network node for selectively supplying direct current power to the at least one power consuming unit. The temperature of each of the battery units 204₁ - 204ₙ is obtained using the respective temperature sensors 236₁ - 236ₙ.

Act 20-2 comprises determining a first subset of battery unit(s) having temperature(s) in essentially a first temperature range. For example, with reference to the embodiment of Fig. 19, it may be that battery unit 204, in first cabinet 240₁ has a temperature in a first range. It may be that the first temperature range is a relative low temperature range, while the battery units 204₂ - 204ₙ of second cabinet 240₂ have a higher temperature outside of the first temperature range.

Act 20-3 comprises essentially concurrently charging the battery units of the first subset. Charging of the first subset can be accomplished by controller 212 directing the respective switch 218 for the battery unit(s) 204 of the first subset be closed in order to enable the charging.

Act 20-4 comprises determining a further subset of battery unit(s) having temperature(s) in essentially a further temperature range. If there are no more batteries or no further temperature ranges, the process of Fig. 20 ends. On the other hand, if there are other batteries and yet other temperature ranges, act 20-2 and act 20-3 are repeated for other temperature ranges. For example, with reference to the embodiment of Fig. 19, it may be that battery units 204₂ - 204ₙ in second cabinet 240₂ have a temperature in a second range. In such case, a second execution of act 20-3 comprises essentially concurrently charging the battery units of the second subset.

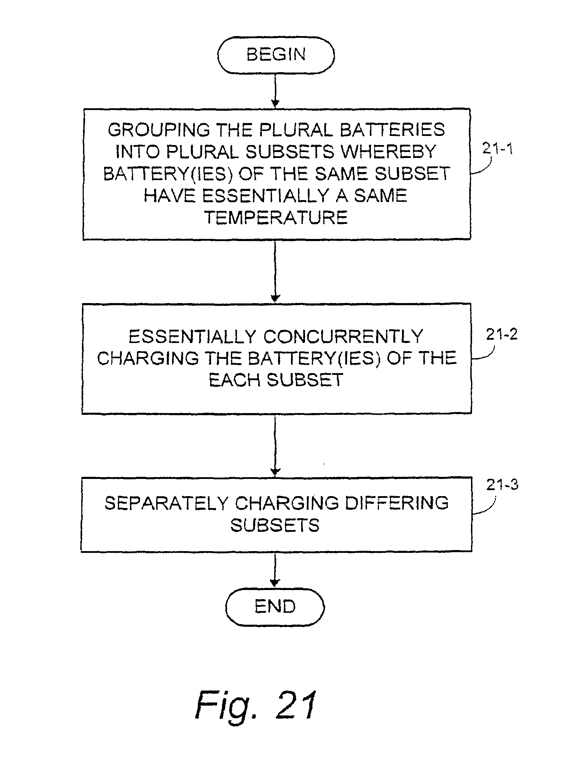

Fig. 21 shows, from another perspective or mode, basic, non-limiting, representative acts or steps comprising method of operating a node of a radio access network. Act 21-1 of the method of Fig. 21 comprises grouping the plural battery units into plural subsets whereby battery unit(s) of the same subset have essentially a same temperature. Act 21-2 comprises essentially concurrently charging the battery unit(s) of the each subset. Act 21-3 comprises separately charging differing subsets.

An example of a charging algorithm can thus be as follows. Measure all temperatures of the battery units 204₁ - 204ₙ. If any battery units 204₁ - 204ₙ have the same temperature, their switches are activated so that charging can commence. After charging of first group, similar acts are repeated for the remaining battery units.

In an example embodiment, the node of a radio access network having temperature-dependent group charging of multiple backup battery units is a base station 28. In such example embodiment of a base station 28 the charger and power supply source 202 can be realized by or be comprised of power supply units (PSU) 126 and battery fuse unit (BFU) 130. The switch 218 can comprise battery fuse unit (BFU) 130. The battery unit 204 can comprise battery section 65, and controller 212 can comprise or be realized by power control system 82/base station main processor 66.

In another example embodiment, the node of a radio access network having temperature-dependent group charging of multiple backup battery units is radio network control node 26. In such example embodiment of a radio network control node 26 the charger and power supply source 202 can be realized by or be comprised of RNC power system 52. The switch 218 can (in an example implementation) comprise RNC power system 52 or be situated on another board of the node. The battery unit 204 can comprise power supply unit 54, and controller 212 can comprise or be realized by general purpose processor board 46 or even one of the special purpose processors 47.

Another aspect of the technology relates to a backup mode. The backup mode includes two options: using only one battery at a time (only one switch activated) or using all battery units at the same time.

Example advantages of this technology include:
- Flexibility: An existing power system can be expanded with separate power banks in different temperature zones. A new power system can be built with "free" placement of battery units.
- Cost effectiveness: A minimum cost penalty exists between small and large backup systems, mainly battery units.

The node thus comprises separate battery banks with individual battery switches and temperature sensors. The battery switches are used to isolate the battery banks from each other during the charging phase. Only the batteries with the same temperature are charged at the same time, meaning that all temperatures are measured, then the appropriate switches are activated to enable charging of the selected batteries. Batteries with different temperature are charged separately. Differing batteries may have different temperatures in view of the differing temperatures of the local load, e.g., of the power consuming units that are proximate the batteries.

7.0 Remote Power Control Functions

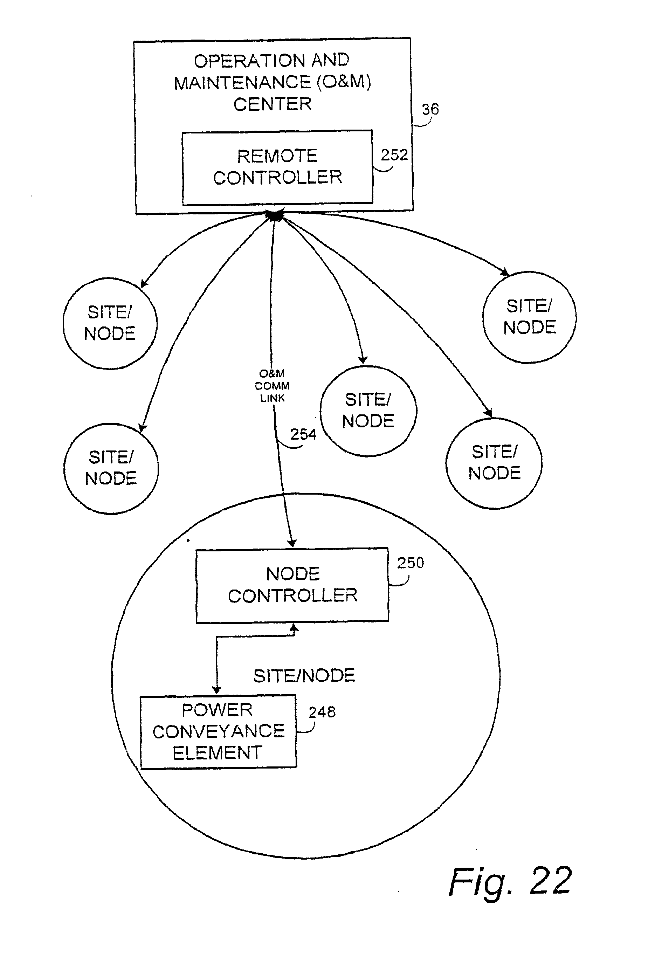

In accordance with another of its aspects the technology disclosed herein concerns embodiments of a node of a radio access network comprising a power conveyance element 248 whose operation is remotely controlled external to the node. Fig. 22 generically illustrates that in such embodiments a node controller 250 is configured to operate the power conveyance element 248 in accordance with signals communicated with a controller which is remote from the node. The node controller 250 can be a controller which is essentially dedicated to operation and management (O&M) operates, or can be a controller of the node which performs node-related operations. In the example illustration of Fig. 22, the controller which is remote from the node can be a controller such as remote controller 252 which comprises or is situated proximate operation and management (O&M) center 36. The signals communicated between a node controller (such as node controller 250 illustrated by way of example) and remote controller 252 can be carried over a communications link, such as O&M communications link 254 shown in Fig. 22. It should further be appreciated that plural (e.g., each of the) nodes shown in Fig. 22 may have similar remote control of a power conveyance element 248.

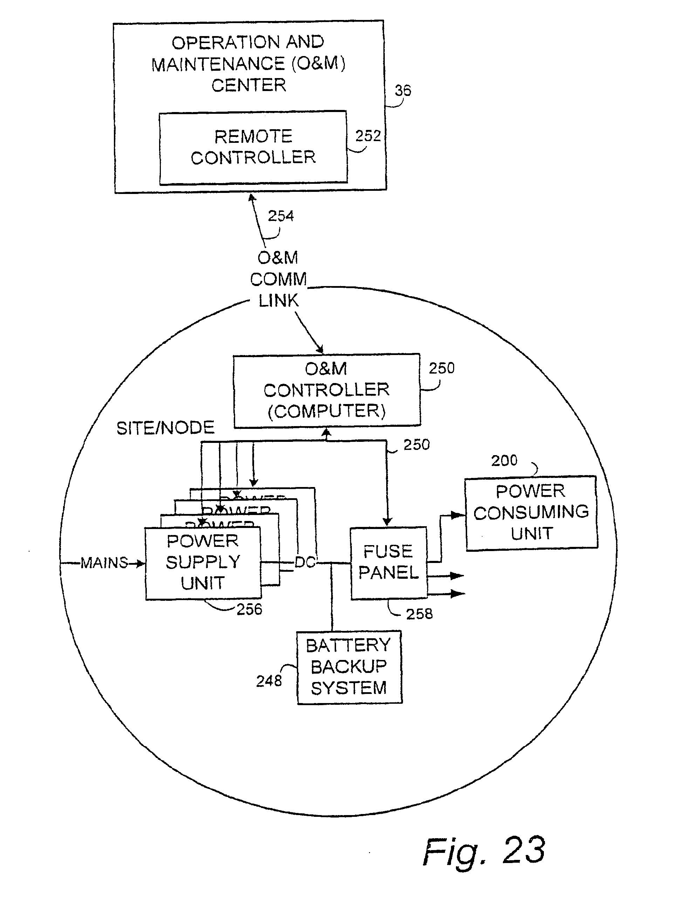

In some example embodiments the power conveyance element can take the form of a fuse (such as an electronic fuse). In other example embodiment the power conveyance elements can take the form of power conveyance resources, such as power supply units or constituent elements thereof, for example. For a representative generic illustration, Fig. 23 shows a more detailed version of a node and that the node controller 250 of any node of the system may connect to plural power conveyance elements in the node served by the node controller 250. For example, the node controller 250 may be connected to one or more power supply units 256 or to a fuse panel 258. In the example embodiment shown in Fig. 23, DC power is supplied to plural power consuming units 200 via fuse panel 258. Upon disruption of the mains AC power supply or other input supply to power supply unit 256, battery backup system 259 can supply the DC power to the power consuming units 200.

From the example embodiment shown in Fig. 23 it should be understood that the operation and management (O&M) center 36 can communicate with plural local node controllers 250 (e.g., for plural nodes/sites, there being one or more node controllers 250 at each node/site). The O&M remote controller 252 can directly control and measure each load (e.g., each fuse in each fuse panel 258) in the entire system. Moreover, the O&M remote controller 252 can directly control and measure each power supply unit 256 in each node/site of the system. The O&M remote controller 252 can also delegate control and measurements for the fuses and power supply units 256 to a local node controller 250 for each node/site.

From Fig. 23 it should be understood that signals for operating each of the plural power conveyance elements 248 (e.g., power supply unit 256 and fuse panel 258, for example) may be communicated over O&M communications link 254 or a similar link from a remote controller such as remote controller 252.

In an example implementation in which the node of Fig. 23 is a radio network control node 26 such as that of Fig. 3, the power supply units 256 can comprise the power supply unit 54 of RNC power system 52 and the battery backup system 259 can comprise battery backup system 56. In example implementation in which the node of Fig. 23 is a base station 28 such as that of Fig. 4, the power supply units 256 can comprise the power supply units (PSU) 126, the battery backup system 259 can comprise battery section 65, the fuse panel 258 can comprise fuse panel 160.

7.1 Remote Control of Fuse

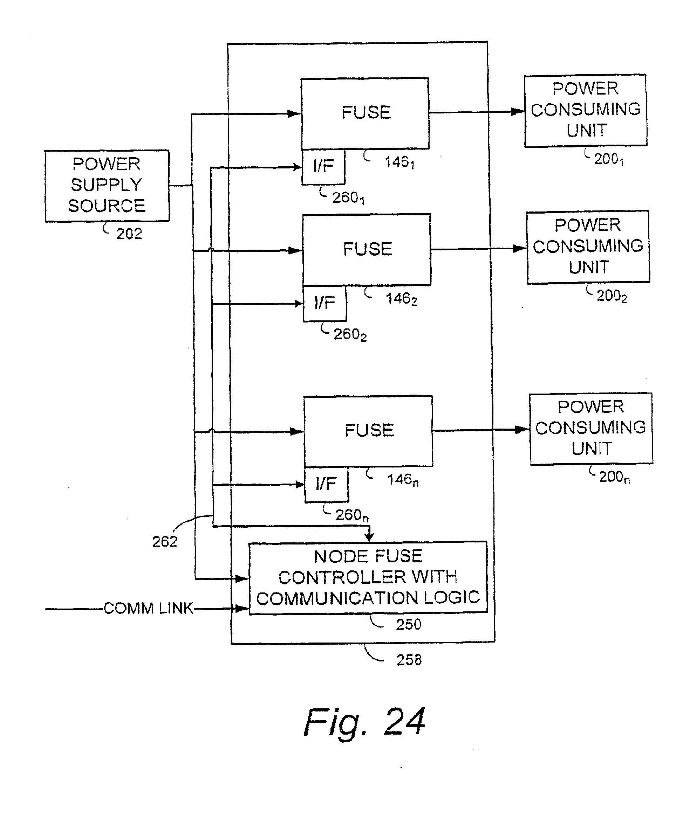

In accordance with another of its aspects the technology disclosed herein concerns a node of a radio access network comprising a fuse whose operation is remotely controlled external to the node. Fig. 24 illustrates portions of a power supply section of a radio access network node which comprises at least one power consuming unit 200 involved in operation of the radio access network node. A fuse 146 is connected on a path of supply of direct current power to the at least one power consuming unit; and a node controller 250. The fuse 146 serves as the power conveyance element in the embodiment of Fig. 24. The node controller 250, also known as a node fuse controller configured, is configured to operate the power conveyance element (e.g., fuse 146) in accordance with signals communicated with a controller which is remote from the node.

In actuality Fig. 24 shows n number of power consuming units, e.g., power consuming units 200₁ through 200ₙ, with each power consuming unit 200 having an associated fuse, e.g., fuses 146₁ - 146ₙ. The node controller 250 is configured to operate the fuses 146₁ - 146ₙ in accordance with signals communicated with the controller which is remote from the node.

In an example implementation the fuse 146 comprises an electronic fuse, and the plural fuses 146₁ - 146ₙ comprise fuse panel 258. Each fuse 146 comprises or has associated therewith a fuse interface 260, e.g., fuses 146₁ - 146ₙ have respective interfaces 260₁ - 260ₙ. The fuses 146₁ - 146ₙ are connected through their respective interfaces 260₁ - 260ₙ to node controller 250 via fuse control bus 262.

In an example implementation the node fuse controller is configured to operate the fuse by performing at least one of the following functions: turn the fuse on; turn the fuse off; monitor status of the fuse; reactivate the fuse when tripped; monitor fuse current; and monitor fuse trip value. The foregoing and other functions can be accomplished by signals issued to and received from fuse interfaces 260 by node controller 250 over fuse control bus 262.

Remotely turning off one or more power consuming units 200 can be beneficial for several reasons. One reason is to save energy consumption, the other is to prolong battery backup time during a means failure. Saving energy by turning off a power consuming unit 200 (by, e.g., turning off its respective fuse) can be accomplished as a planned action from the O&M remote controller 252 or delegated to the local site (e.g., to node controller 250), or both. An example of a planned action could be when the power system feeds one or several telecommunication system. In a low traffic scenario then parts of the systems or an entire system can be turned off.

During a mains failure, for instance a mains failure caused by natural catastrophe, it may be beneficial to prolong the backup time as long as possible for essential parts of the system. This may be done from the operation and management (O&M) center 36, or delegated to the local sites as predefined behavior, only triggered by the operation and management (O&M) center 36, or delegated to the local sites as predefined behavior, only triggered by the operation and management (O&M) center 36.

During a normal mains failure it may be beneficial to have a predefined behavior of how to use the battery backup system 259. As an example, the remaining backup time can be calculated by a local controller of the node. The remaining time can be used to select between different prioritized consumers. For example, if the backup capacity is currently at 100%, the entire system (e.g., entire load of power consuming units) can be supported (so the fuses for all power consuming units can be on). If the backup capacity has dropped to 75% of total capacity, then less important parts of the system such as less important power consuming units can be turned off (e.g., by turning off their respective fuses, either remotely or upon local action pre-programmed by remote control). If the backup capacity has dropped to 25% of total capacity, then only most important parts of the system such as most important power consuming units can be kept on (e.g., by turning off respective fuses for all but the most important parts, either remotely or upon local action pre-programmed by remote control).

Other advantages can be realized in other fault situations. For example, if a fuse has blow for a particular power consuming unit 200, it is possible to turn the fuse on again remotely via O&M remote controller 252, without having to visit the geographical location for the node/site of the power consuming unit with the blown fuse. The remote control of fuses can also be useful in situations in which it is necessary or desirable to turn on and off a fuse in order to reset or reboot a unit which is experiencing a malfunction such as malfunctioning software.

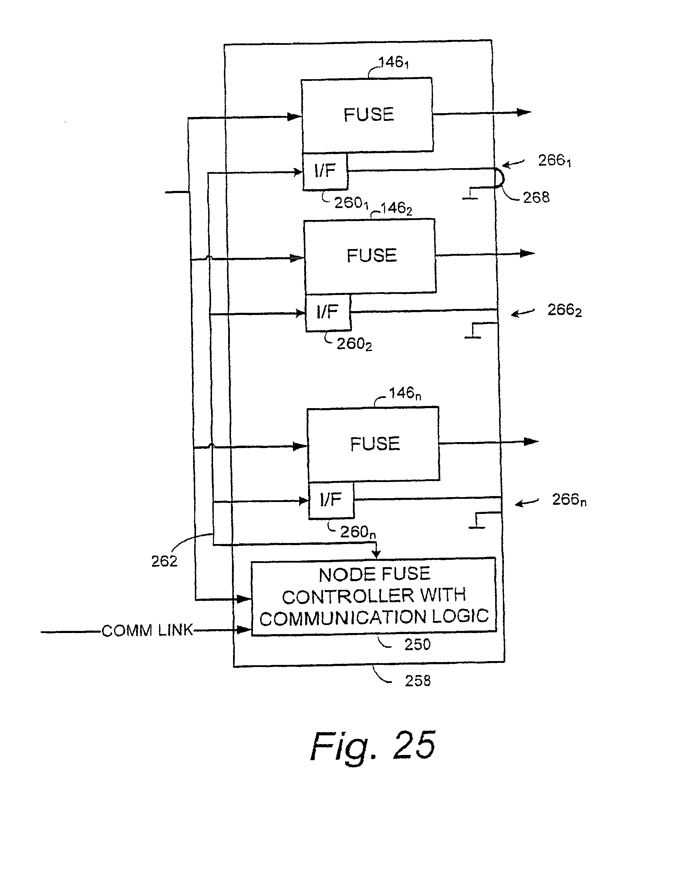

Fig. 25 shows another example embodiment wherein the power conveyance element is a fuse, and wherein the fuse 146 further comprises a fuse switch 266 configured to selectively allow remote operation of the fuse. In the example scenario illustrated in Fig. 25, fuse 146₁ has its fuse switch 266₁ closed by a jumper 268 to enable remote control of fuse 146₁. In the example scenario illustrated in Fig. 25 the remaining fuses 146₂ through 146ₙ do not have their fuse switches 266 closed, and thus are not susceptible to remote control.

Thus, in example embodiments and mode, direct current (DC) consumers can be completely turned off when they not are needed. In an example implementation, this on/off feature can be done remotely, based on knowledge not known on the local site, like scheduled power mains turn off or capacity reductions or similar. The remote control feature can turn on/off individual fuses in the fuse-panel or redundant power supply units in the system. The remote control feature can also read fuse status (tripped or not) and reactivate a tripped fuse. In an example implementation the technology can advantageously use the existing O&M links as/for communication.

Fig. 24 has shown an embodiment and mode providing for remote control of consumer load. In the Fig. 24 embodiment control of consumer load is done in the fuse panel 158. In each fuse panel is placed communication logic with is designed to connect to a remote controller, such as at or comprising the O&M system. This communication logic is also connected to each fuse and can thereby control and monitor the fuse. The fuse panel can be designed with electro mechanical or with electronic fuses. Electronic fuses are preferred due to the fact that they are most cost effective and enable some of the functions with a minimum logic.

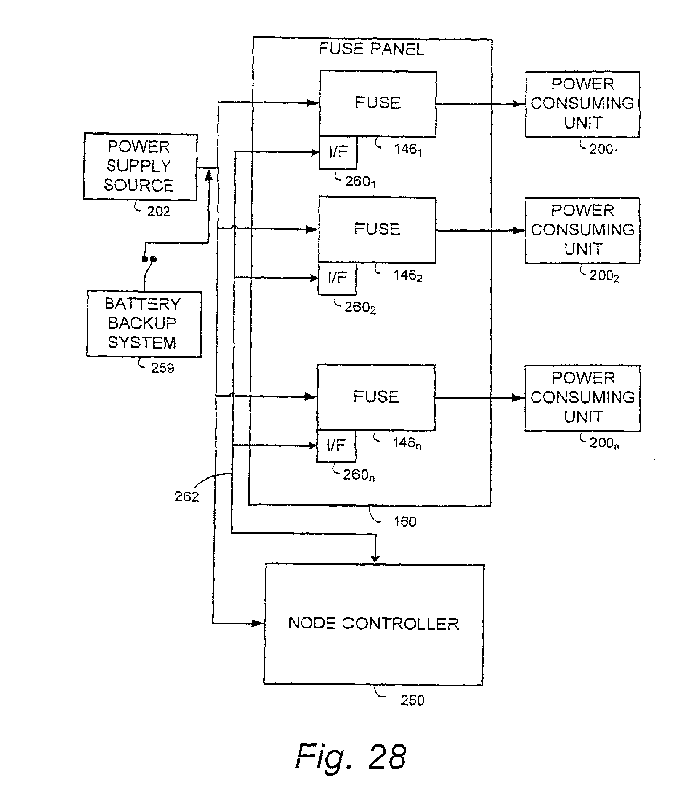

In the particular illustration of Fig. 24, the node fuse controller 250 happens to be located within fuse panel 258. In other implementations, such as those understood from Fig. 23 and Fig. 28, for example, the node fuse controller 250 can be situated in the node but outside the fuse panel 258 (as in the case of node controller 250 being an operation & management controller for the node). The remote controller can be a controller such as remote controller 252 illustrated by way of example in Fig. P26549-0. Fig. 28 also shows the connection of battery backup system 259.

To enable the remote function, the fuse panel comprises a remote control function for each fuse (a switch jumper or similar), an example implementation being shown in Fig. 25. The reason for this function is to prevent the possibility to disconnect a consumer which is necessary for the system, like a communication device for the O&M (operations and management) link.

7.1.1 Remote Control of Fuse for Heater

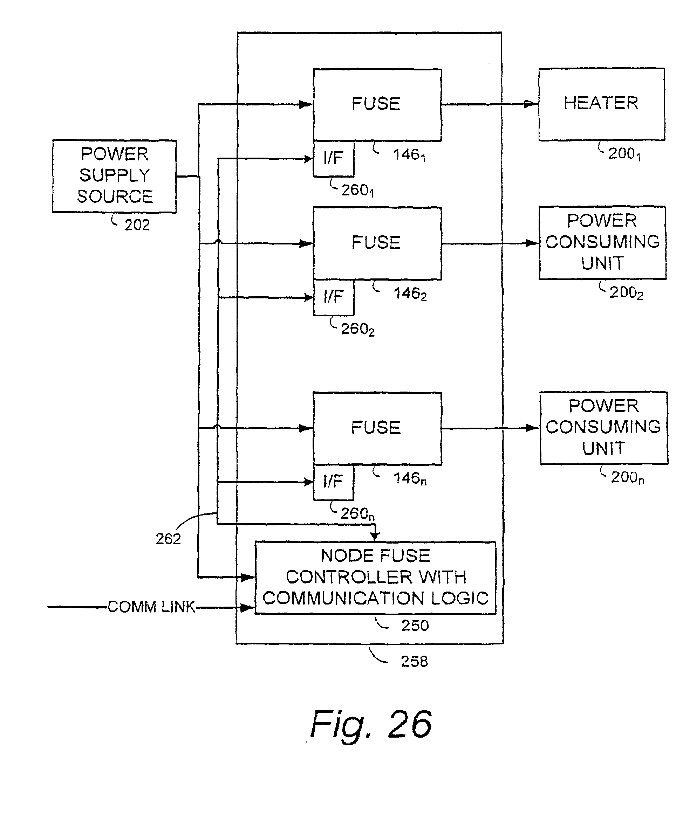

A more specific case of remote control of a fuse is illustrated in Fig. 26 wherein node heater activation is controlled external to the node. In other words, in the Fig. 26 embodiment one of the power consuming units, in particular power consuming unit 200₁, is a heater for the node. In the Fig. 26 embodiment the node controller 250 is configured to operate the fuse 146₁ for the heater 200₁ in accordance with signals communicated with the controller which is remote from the node. It may be that the other power consuming units of the node of Fig. 26 have been turned off (e.g., their respective fuses have been turned off) in view of inclement (e.g., cold) temperature of the node. In such case the remote controller (e.g., remote controller 252 of operation and management (O&M) center 36) can issue signals to the node controller 250 to operate (turn on) the fuse 146₁ for heater 200₁ in order to accelerate start up time for the other power consuming units, e.g., to warm up the node so that the other power consuming units will attain a temperature conducive to node operation.

7.1.2 Remote Control of Fuse for Cooling Device

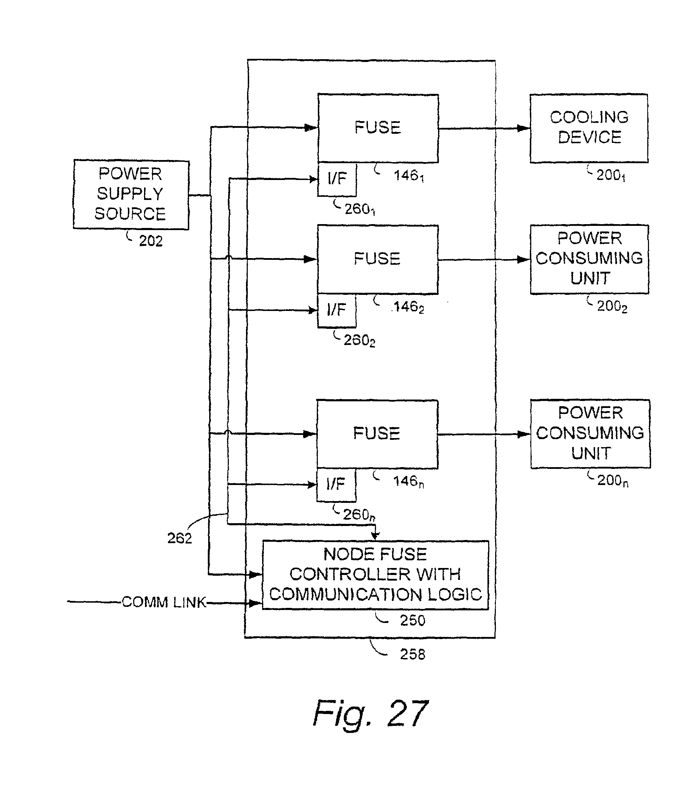

Another specific case of remote control of a fuse is illustrated in Fig. 27 wherein activation of a node cooling device is controlled external to the node. In other words, in the Fig. 27 embodiment one of the power consuming units, in particular power consuming unit 200₁, is a cooling device for the node. The node controller 250 is configured to operate the fuse 146₁ for the cooling device 200₁ in accordance with signals communicated with the controller (e.g., remote controller 252 of operation and management (O&M) center 36) which is remote from the node until another power consuming device attains a predetermined temperature.

It may be that the other power consuming units of the node of Fig. 27 have been turned off (e.g., their respective fuses have been turned off) in view of overheating of one or more of the power consuming units or of the node in general. In such case the remote controller (e.g., remote controller 252 of operation and management (O&M) center 36) can issue signals to the node controller 250 to operate (turn on) the fuse 146₁ for cooling device 200₁.

7.2 Remote Control of Power Supply Unit(s)

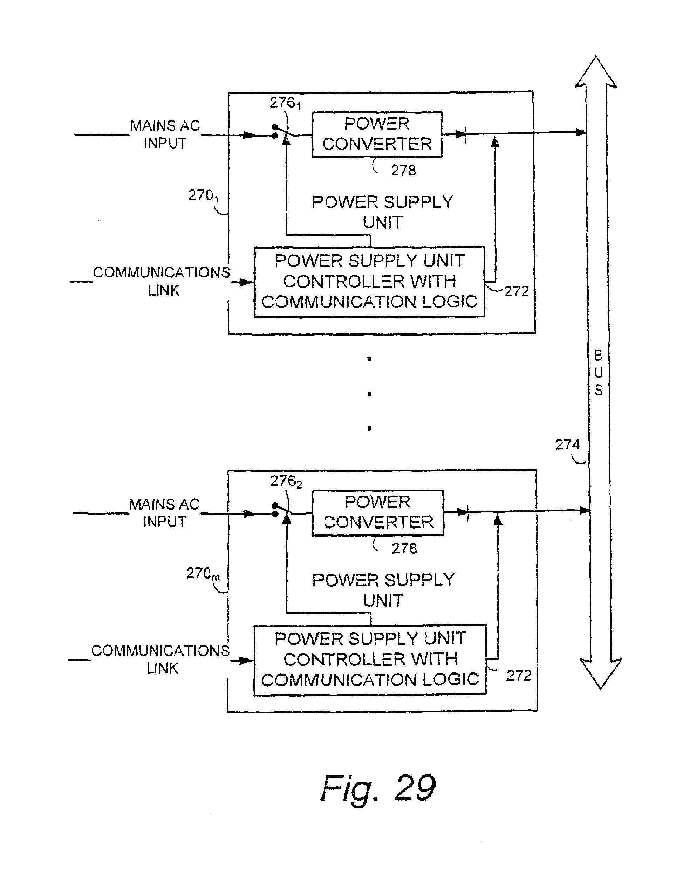

Already described are example embodiments wherein the power conveyance element is a fuse or the like. Fig. 23 together with Fig. 29 illustrates another example embodiment wherein the power conveyance element whose operation is controlled remote from the node takes the form of a power supply unit.

In the example embodiment of Fig. 29 the power conveyance element thus takes the form of a power supply unit 270. The power supply unit 270 is typically configured to convert an input electrical supply to an electrical output usable by the node. An example power supply unit 270 for a radio base station is the aforementioned power supply unit (PSU) 126.

In the example implementation of Fig. 29, the node preferably comprises plural power supply units 270₁ through 270ₘ configured whereby the node can be operated with selected ones but not all of the plural power supply units. Each of the plural power supply units 270₁ through 270ₘ applies appropriate power (e.g., -48 VDC in the case of a radio base station) to power bus 274 (which can be, for example, the power system voltage bus 144 in the case of a radio base station). Indeed, a site power system (e.g., a node) often comprises of a number of power supply units connected in parallel to achieve the sufficient power needed for a maximum loaded system. In low load situations, some of the power supply units may not be necessary and therefore (when not necessary) will be idling. By introducing remote control logic in the power supply units and feeding the remote logic from the DC side it is possible to turn off the power supply units.

In the example embodiment of Fig. 29 the node controller is a power supply unit 170. There can be a separate power supply controller 272 for each power supply unit 270, or a single controller (such as O&M controller or node controller 250 of Fig. 23) which serves as a controller for all power supply units.

In the scenario shown in Fig. 29 the remote controller may realize that power supply unit 270₁ is not necessary for current functioning of the node, and may transmit communication signals on a communication link (e.g., O&M communications link 254) to power supply controller 272 to direct that power supply controller 272 turn off power supply unit 270₁, while the remaining (or selected other) power supply units remain on.

The turning off or turning on of a power supply unit 270 can be accomplished by respectively closing or opening a switch on an appropriate power supply line. For example, the example embodiment of Fig. 29 the power supply controller 272, in response to a signal from the remote controller, can issue a command to close or open switch 276 on the mains AC input line and positioned upstream from a power converter element 278.

In another example implementation, the node controller further comprises a monitor configured to monitor at least one of the following at the power supply unit: DC output voltage; DC output current; mains input voltage; main current consumption. In another example implementation (combineable with or separate from other example implementations) the node controller is further configured to control at least one of maximum DC output current and maximum mains current input.

Thus, in an example embodiment such as that of Fig. 29 it is possible to turn of the power supply units to save energy. Either node controller 250 or O&M remote controller 252 can collect the electrical current consumption at output of each power supply unit 270 or at the output of each fuse and at a battery backup system. When the total electrical current is less than a predefined level, the O&M remote controller 252 (or the node controller 250 under supervision of O&M remote controller 252) can turn off one or more power supply units 270. When the electrical current rises to a satisfactory level, the O&M remote controller 252 (or the node controller 250 under supervision of O&M remote controller 252) can activate the previously turned-off power supply units 270 in order to match consumption. This technique can facilitate use of an optimum number of power supply units 270 for each load situation which give minimum energy consumption.

In an example case, an algorithm is implemented to turn off one power supply unit (PSU) 270 whenever the consumed current (I-sum) is less than the available PSU current (^{*}n-1). The algorithm is implemented in a situation in which there are five power supply units (PSUs), e.g., n=5, the maximum PSU capacity is 25 amps, the PSU efficiency is 95%, the voltage is 50 volts, the idle power per PSU is 30 watts, and the consumed current is 20 amps. The power loss without optimization (without practicing the selective PSU turn off) is 173 Watts (53 +30+30+30+30). Using the optimization of the technology disclosed herein of turning off power supply units, the power loss is only 53Watts. When the current consumption increases again, the process is reversed. If the load increases rapidly over the used PSU capacity, the backup system can deliver current until the needed number of power supply units are again connected.

8.0 Local Power Control Functions

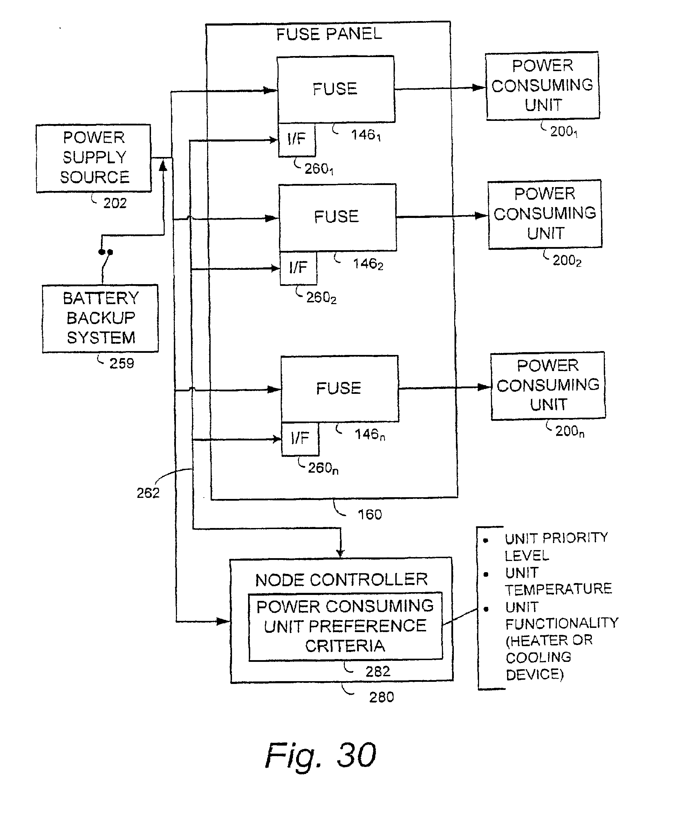

In accordance with another of its aspects the technology disclosed herein concerns a node of a radio access network wherein power supply operation is locally controlled on the basis of preference characteristics for plural power consuming units. In particular, Fig. 30 shows a node of a radio access network comprising plural power consuming units 200₁ - 200ₙ involved in operation of the radio access network node, with plural power conveyance elements (e.g., fuses 146₁- 146ₙ) connected on respective paths of supply of direct current power to the respective plural power consuming units 200₁ - 200ₙ. A node controller 280 is configured to discriminately operate the power conveyance elements in accordance with respective preference characteristics (e.g., power consuming unit preference criteria) of the respective power consuming units. The power consuming unit preference criteria can be stored at the node in a memory (preferably non-volatile), and for sake of simplicity of illustration is shown as power consuming unit preference criteria 282 in Fig. 30.

In an example embodiment the node further comprises backup battery system 284 for the node. The backup battery system 284 can be configured or operated in accordance with, e.g., any of the embodiments of backup battery(ies) described herein. In an example implementation, the node controller 280 is configured to discriminately operate the power conveyance elements, and to do so particularly when the plural power consuming units require power from the backup battery.

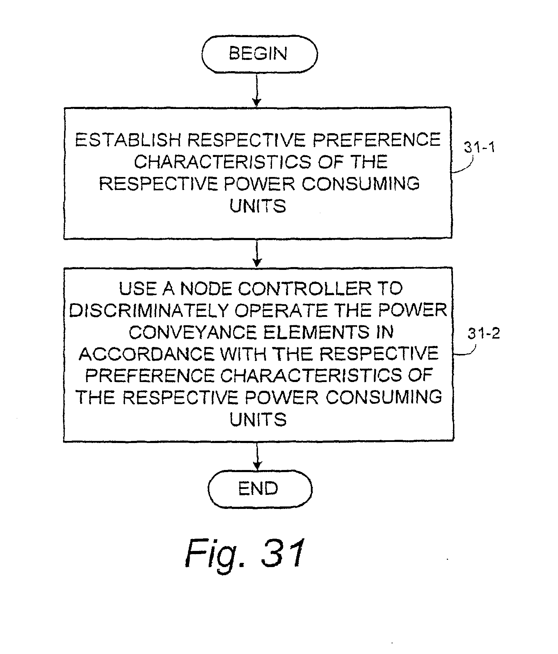

Fig. 31 is shows basic, non-limiting acts or steps of an example method wherein a power supply operation for a node such as that of Fig. 30 is locally controlled the basis of preference characteristics for plural power consuming units. Act 31-H-1 of the method of Fig. 31 comprises establishing respective preference characteristics for the respective power consuming units 200. The preference characteristics for the respective power consuming units can be stored at a memory as indicated by power consuming unit preference criteria 282. Act 31-2 of the method of Fig. 31 comprises using a node controller (such as node controller 280) to discriminately operate the power conveyance elements (e.g., fuses 146) in accordance with the respective preference characteristics of the respective power consuming units 200.

In an example embodiment the respective preference characteristics can be respective priority levels, e.g., importance priority levels for the differing power consuming units 200. In other words, it is possible to disconnect loads (e.g., power consuming units) which are not defined as priority from the power distribution when the system voltage is below a pre-set disconnect value. When the system voltage exceeds a pre-set reconnect value, the disconnected loads can be reconnected.

In another example embodiment the respective preference characteristics can be respective temperature measurements for the respective plural power consuming units.

In yet another example embodiment the preference characteristic of at least one of the power consuming units is the fact that the at least one of the power consuming unit is a heater. It may be, for example, that the other power consuming units of the node of Fig. 30 have been turned off (e.g., their respective fuses have been turned off) in view of inclement (e.g., cold) temperature of the node. In such case node controller 280 can issue signals to operate (turn on) the fuse for the heater in order to accelerate start up time for the other power consuming units, e.g., to warm up the node so that the other power consuming units will attain a temperature conducive to node operation. Thus, the temperature-sensitive consumers are not activated until the temperature reaches a certain level. In this function the heating device can be used to speed up the start up time. This function can be remotely controlled.

In still yet another example embodiment the preference characteristic of at least one of the power consuming units is the fact that the at least one of the power consuming unit is a cooling device. It may be, for another example, that the other power consuming units of the node of Fig. 30 have been turned off (e.g., their respective fuses have been turned off) in view of overheating of one or more of the power consuming units or of the node in general. In such case the power consuming unit preference criteria 282 can issue signals to operate (turn on) the fuse for the cooling device. Thus, another function that can be controlled locally is protecting equipment from damaging by to high temperature. In such an embodiment and mode temperature sensitive/ heat generating consumers are turned off and an "emergency blower"/cooler is connected until the temperature has reached the predefined level. This function can also be remotely controlled.

Apart from remote control of the fuse panel, a number of functions can be useful to control locally. Each fuse can be controlled (On/Off) by a number of local events like, voltage level of the battery. This local control function can be useful when running on battery backup, when some consumers have priority over the others. At certain levels of the battery capacity less important consumers can be turned off in favor of others. This function can also be remotely controlled.

Thus, the present technology facilitates and/or enables a number of possibilities to save energy and prolong backup time in a generic way with a minimum of components.

Variations and modifications are possible within the scope of the appended claims.

## Claims

1. A node of a radio access network comprising:
at least one power consuming unit (200) involved in operation of the radio access network node;
a power supply source (202) configured to supply direct current power to the at least one power consuming unit (200);
plural back-up battery units (204) arranged in parallel with each other, each configured for selective connection to the at least one power consuming unit (200) for selectively supplying direct current power to the at least one power consuming unit (200);
plural temperature sensors configured to measure temperatures of the respective plural back-up battery units (204);
a charging unit (202) configured for selective connection to each of the plural back-up battery units (204);
a controller (212) connected to the plural temperature sensors (236) and configured to charge essentially concurrently only the back-up battery units (204) having an essentially same temperature such that back-up battery units (204) of differing temperatures are charged at different times.

2. The apparatus of claim 1, wherein each of the plural back-up battery units (204) comprises a single battery.

3. The apparatus of claim 1, wherein each of the plural back-up battery units (204) comprises a bank of plural batteries.

4. The apparatus of claim 1, wherein each of the plural back-up battery units (204) comprises one or more batteries residing in a same radio access network node cabinet structure (240).

5. A method of operating a node of a radio access network, the radio access network node comprising at least one power consuming unit (200) involved in operation of the radio access network node, a power supply source (202) configured to supply direct current power to the at least one power consuming unit (200), plural back-up battery units (204) arranged in parallel with each other, each of the plural battery units (204) being configured for selective connection to the at least one power consuming unit (200) for selectively supplying direct current power to the at least one power consuming unit (200), plural temperature sensors configured to measure temperatures of the respective plural back-up battery units (204), a charging unit (202) configured for selective connection to each of the plural back-up battery units (204), and a controller (212) connected to the plural temperature sensors (236), the method comprising:
grouping the plural back-up battery units (204) into plural subsets whereby back-up battery unit(s) of the same subset have essentially a same temperature;
essentially concurrently charging only the battery unit(s) of a subset; and
charging back-up battery units of differing subsets at different times.

## Patentansprüche

1. Knoten eines Funkzugangsnetzes, umfassend:
mindestens eine Leistungsverbrauchseinheit (200), die am Betrieb des Funkzugangsnetzknotens beteiligt ist;
eine Leistungsversorgungsquelle (202), die so konfiguriert ist, dass sie die mindestens eine Leistungsverbrauchseinheit (200) mit Gleichstromleistung versorgt;
mehrere Stützbatterieeinheiten (204), die parallel zueinander angeordnet und jeweils zur selektiven Verbindung mit der mindestens einen Leistungsverbrauscheinheit (200) konfiguriert sind, um die mindestens eine Leistungsverbrauchseinheit (200) selektiv mit Gleichstromleistung zu versorgen;
mehrere Temperatursensoren, die so konfiguriert sind, dass sie Temperaturen der jeweiligen mehreren Stützbatterieeinheiten (204) messen;
eine Ladeeinheit (202), die zur selektiven Verbindung mit jeder der mehreren Stützbatterieeinheiten (204) konfiguriert ist;
eine Steuerung (212), die mit den mehreren Temperatursensoren (236) verbunden und so konfiguriert ist, dass sie nur die Stützbatterieeinheiten (204) im Wesentlichen gleichzeitig lädt, die eine im Wesentlichen gleiche Temperatur aufweisen, derart dass Stützbatterieeinheiten (204) von verschiedenen Temperaturen zu verschiedenen Zeiten geladen werden.

2. Vorrichtung nach Anspruch 1, wobei jede der mehreren Stützbatterieeinheiten (204) eine einzelne Batterie aufweist.

3. Vorrichtung nach Anspruch 1, wobei jede der mehreren Stützbatterieeinheiten (204) eine Reihe von mehreren Batterien aufweisen.

4. Vorrichtung nach Anspruch 1, wobei jede der mehreren Stützbatterieeinheiten (204) eine oder mehr Batterien aufweist, die sich in einer gleichen Schrankstruktur (240) des Funkzugangsnetzknotens befinden.

5. Verfahren zum Betreiben eines Knotens eines Funkzugangsnetzes, wobei der Funkzugangsknoten umfasst: mindestens Leistungsverbrauchseinheit (200), die am Betrieb des Funkzugangsnetzknotens beteiligt ist, eine Leistungsversorgungsquelle (202), die so konfiguriert ist, dass sie die mindestens eine Leistungsverbrauchseinheit (200) mit Gleichstromleistung versorgt, mehrere Stützbatterieeinheiten (204), die parallel zueinander angeordnet sind, wobei jede der mehreren Stützbatterieeinheiten (204) zur selektiven Verbindung mit der mindestens einen Leistungsverbrauscheinheit (200) konfiguriert ist, um die mindestens eine Leistungsverbrauchseinheit (200) selektiv mit Gleichstromleistung zu versorgen, mehrere Temperatursensoren, die so konfiguriert sind, dass sie Temperaturen der jeweiligen mehreren Stützbatterieeinheiten (204) messen, eine Ladeeinheit (202), die zur selektiven Verbindung mit jeder der mehreren Stützbatterieeinheiten (204) konfiguriert ist, und eine Steuerung (212), die mit den mehreren Temperatursensoren (236) verbunden ist, wobei das Verfahren umfasst:
Einteilen der mehreren Stützbatterieeinheiten (204) in mehrere Teilsätze, wobei Stützbatterieeinheit(en) des gleichen Teilsatzes im Wesentlichen eine gleiche Temperatur aufweisen;
im Wesentlichen gleichzeitiges Laden nur der Batterieeinheit(en) eines Teilsatzes; und
Laden von Batterieeinheiten von verschiedenen Teilsätzen zu verschiedenen Zeiten.

## Revendications

1. Noeud de réseau d'accès radio comprenant :
au moins une unité de consommation de puissance (200) impliquée dans l'exploitation du noeud de réseau d'accès radio ;
une source d'alimentation en puissance (202) configurée pour alimenter en puissance en courant continu l'au moins une unité de consommation de puissance (200) ;
plusieurs unités de batterie de secours (204) agencées en parallèle les unes avec les autres, chacune étant configurée pour la connexion sélective à l'au moins une unité de consommation de puissance (200) pour alimenter sélectivement en puissance en courant continu l'au moins une unité de consommation de puissance (200) ;
plusieurs capteurs de température configurés pour mesurer les températures des plusieurs unités de batterie de secours (204) respectives ;
une unité de charge (202) configurée pour la connexion sélective à chacune des plusieurs unités de batterie de secours (204) ;
un dispositif de commande (212) connecté aux plusieurs capteurs de température (236) et configuré pour charger essentiellement simultanément uniquement les unités de batterie de secours (204) ayant essentiellement la même température de telle sorte que des unités de batterie de secours (204) de températures différentes sont chargées à des moments différents.

2. Appareil selon la revendication 1, dans lequel chacune des plusieurs unités de batterie de secours (204) comprend une seule batterie.

3. Appareil selon la revendication 1, dans lequel chacune des plusieurs unités de batterie de secours (204) comprend un groupe de plusieurs batteries.

4. Appareil selon la revendication 1, dans lequel chacune des plusieurs unités de batterie de secours (204) comprend une ou plusieurs batteries résidant dans la même structure d'armoire de noeud de réseau d'accès radio (240).

5. Procédé d'exploitation d'un noeud de réseau d'accès radio, le noeud de réseau d'accès radio comprenant au moins une unité de consommation de puissance (200) impliquée dans l'exploitation du noeud de réseau d'accès radio, une source d'alimentation en puissance (202) configurée pour alimenter en puissance en courant continu l'au moins une unité de consommation de puissance (200), unités de batterie de secours (204) agencées en parallèle les unes avec les autres, chacune des plusieurs unités de batterie de secours (204) étant configurée pour la connexion sélective à l'au moins une unité de consommation de puissance (200) pour alimenter sélectivement en puissance en courant continu l'au moins une unité de consommation de puissance (200), plusieurs capteurs de température configurés pour mesurer les températures des plusieurs unités de batterie de secours (204) respectives, une unité de charge (202) configurée pour la connexion sélective à chacune des plusieurs unités de batterie de secours (204), et un dispositif de commande (212) connecté aux plusieurs capteurs de température (236), le procédé comprenant :
le groupement des plusieurs unités de batterie de secours (204) en plusieurs sous-ensembles, moyennant quoi la ou les unités de batterie de secours du même sous-ensemble ont essentiellement la même température ;
la charge essentiellement simultanément de la ou des unités de batterie d'un sous-ensemble uniquement ; et
la charge des unités de batterie de secours de différents sous-ensembles à différents moments.
